(19) **Europäisches Patentamt / European Patent Office / Office européen des brevets**

(11) **EP 4 213 373 B1**

(12) **EUROPEAN PATENT SPECIFICATION**

(45) Date of publication and mention
of the grant of the patent:
**25.02.2026 Bulletin 2026/09**

(21) Application number: **21866613.9**

(22) Date of filing: **01.09.2021**

(51) International Patent Classification (IPC):
*H02P 27/08* (2006.01)   *H02P 21/05* (2006.01)
*H02P 21/00* (2016.01)   *H02P 6/10* (2006.01)
*H02P 29/50* (2016.01)   *H02M 1/12* (2006.01)

(52) Cooperative Patent Classification (CPC):
**H02P 27/085; H02M 1/12; H02M 7/5395;
H02P 6/10; H02P 21/0021; H02P 21/05;
H02P 29/50**

(86) International application number:
**PCT/JP2021/032060**

(87) International publication number:
**WO 2022/054654 (17.03.2022 Gazette 2022/11)**

(54) **CONTROL DEVICE FOR ROTATING ELECTRICAL MACHINE**

STEUERUNGSVORRICHTUNG FÜR EINE ELEKTRISCHE DREHMASCHINE

DISPOSITIF DE COMMANDE POUR MACHINE ÉLECTRIQUE TOURNANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.09.2020 JP 2020153611**

(43) Date of publication of application:
**19.07.2023 Bulletin 2023/29**

(73) Proprietor: **DENSO CORPORATION
Kariya-city, Aichi 448-8661 (JP)**

(72) Inventors:
• **TSUKAMOTO, Yasuhiro
Kariya-city, Aichi 448-8661 (JP)**
• **IRIE, Koji
Kariya-city, Aichi 448-8661 (JP)**

(74) Representative: **TBK
Bavariaring 4-6
80336 München (DE)**

(56) References cited:
**EP-A1- 3 527 420       JP-A- 2009 124 910
JP-A- 2010 161 929     JP-A- 2017 204 913
JP-A- 2018 201 321     JP-A- 2018 201 321
US-A1- 2017 207 739**

EP 4 213 373 B1

# EP 4 213 373 B1

## Description

[TECHNICAL FIELD]

The present disclosure relates to control apparatuses for rotating electric machines.

[BACKGROUND ART]

There are known control apparatuses applied to systems which include a rotating electric machine, a DC power supply and an inverter that electrically connects the rotating electric machine and the DC power supply. The control apparatuses set a pulse pattern, which defines a switching pattern of switches constituting the inverter, and control switching of the switches based on the set pulse pattern so as to control drive of the rotating electric machine.

Moreover, as disclosed in Patent Document 1, there is also known a control apparatus that uses a pulse pattern defined by imposing a requirement to reduce, of harmonic components of electric current flowing between the DC power supply and a smoothing capacitor of the inverter, $(6 \times N)$th-order (N is a positive integer) harmonic components in the vicinity of a resonant frequency of an LC resonant circuit; the LC resonant circuit includes the DC power supply and the smoothing capacitor.

[PRIOR ART LITERATURE]

[PATENT LITERATURE]

[Patent Document 1]: Japanese Patent No. JP6221958B2

Document JP 2018/201321 A discloses a control device for a rotary electric machine, wherein the control device comprises: a field controller that controls a field current flowing in a field coil to a field command current, a first controller, a second controller, and a transition controller. When a modulation factor is larger than 1, the first controller controls a current flowing in a stator coil on the basis of a command value for controlling a torque of a rotary electric machine to a command torque. The second controller, when the modulation factor is smaller than the modulation factor in a case where the control of the first controller is performed, controls the current flowing in the stator coil by sine wave PWM control. The transition controller, at switching from control of the second controller to control of the first controller, for example, suppresses change in actual torque to the command torque by adjusting the command value used in the second controller while making the field command current continuous before and after the switching of the control.

The further cited document EP 3 527 420 A1 discloses a controller of an electrically powered vehicle including an electronic control unit. The electronic control unit performs a switching control by a square wave control in a first switching mode when a rotation speed of a motor of the vehicle is equal to or higher than a first predetermined rotation speed. The electronic control unit performs the switching control by the square wave control in a second switching mode when the rotation speed of the motor is lower than the first predetermined rotation speed. The first predetermined rotation speed is a rotation speed lower than a first resonance region. The first switching mode is a mode of a switching pattern that suppresses LC resonance in the first resonance region. The second switching mode is a mode of a switching pattern that suppresses LC resonance in a second resonance region lower than the first predetermined rotation speed.

[SUMMARY OF THE INVENTION]

The resonance of the electric current flowing between the DC power supply and the smoothing capacitor is problematic only in part of an operation region of the rotating electric machine. Therefore, if the pulse pattern defined by imposing the requirement to reduce the $(6 \times N)$th-order harmonic components is used for the switching control in other parts of the operation region of the rotating electric machine than the part where the resonance should be suppressed, it may become impossible to properly control drive of the rotating electric machine, resulting in problems such as a decrease in the efficiency of the system.

In addition, the above problems may occur when a pulse pattern, which is defined by imposing a specific requirement that is not limited to the requirement to reduce the $(6 \times N)$th-order harmonic components, is commonly used in the entire operation region of the rotating electric machine.

It is, therefore, a primary object of the present disclosure to provide a control apparatus for a rotating electric machine which can properly control drive of the rotating electrical machine.

This object is solved by a control apparatus for a rotating electric machine as defined in claim 1.

According to the present disclosure, the operation region of the rotating electric machine is divided into the plurality of individual regions. The pattern setting unit acquires the determination parameter indicating the operating point of the rotating electric machine and sets a pulse pattern corresponding to, of the plurality of individual regions, the

2

individual region that includes the acquired determination parameter; the set pulse pattern is then used for the switching control by the switch control unit. Moreover, the pulse patterns respectively corresponding to the plurality of individual regions include pulse patterns defined by imposing mutually different requirements. Consequently, it becomes possible to perform, in each of the plurality of individual regions, switching control according to the problem(s) to be solved in the individual region. As a result, it becomes possible to properly control drive of the rotating electric machine.

Advantageous developments are defined in the dependent claims.

[BRIEF DESCRIPTION OF THE DRAWINGS]

The above-described object, other objects, features and beneficial advantages according to the present disclosure will become more apparent from the following detailed explanation with reference to the accompanying drawings. In the drawings:

FIG. 1 is an overall configuration diagram of a control system according to a first embodiment;
FIG. 2 is a functional block diagram illustrating a process performed by a control apparatus according to the first embodiment;
FIG. 3 is a diagram illustrating an operation region of a rotating electric machine according to the first embodiment;
FIG. 4 is a flowchart illustrating steps of a pulse pattern setting process according to the first embodiment;
FIG. 5 is a diagram illustrating an operation region of a rotating electric machine according to a second embodiment;
FIG. 6 is a flowchart illustrating steps of a pulse pattern setting process according to the second embodiment;
FIG. 7 is a diagram illustrating an operation region of a rotating electric machine according to a third embodiment;
FIG. 8 is a flowchart illustrating steps of a pulse pattern setting process according to the third embodiment;
FIG. 9 is a diagram illustrating the manner of correcting boundaries between individual regions according to a fourth embodiment;
FIG. 10 is a flowchart illustrating steps of an update process according to a fifth embodiment;
FIG. 11 is a time chart illustrating fluctuations in the rotational speed of a rotor according to a sixth embodiment;
FIG. 12 is a diagram illustrating a pulse pattern setting method according to the sixth embodiment;
FIG. 13 is a flowchart illustrating steps of a pulse pattern setting process according to another embodiment; and
FIG. 14 is a flowchart illustrating steps of a pulse pattern setting process according to yet another embodiment.

[EMBODIMENTS FOR CARRYING OUT THE INVENTION]

(First Embodiment)

Hereinafter, a first embodiment embodying a control apparatus according to the present disclosure will be described with reference to the drawings. The control apparatus according to the present embodiment constitutes, together with a rotating electric machine, a control system. The control system is installed in a vehicle and the rotating electric machine serves as a driving power source of the vehicle.

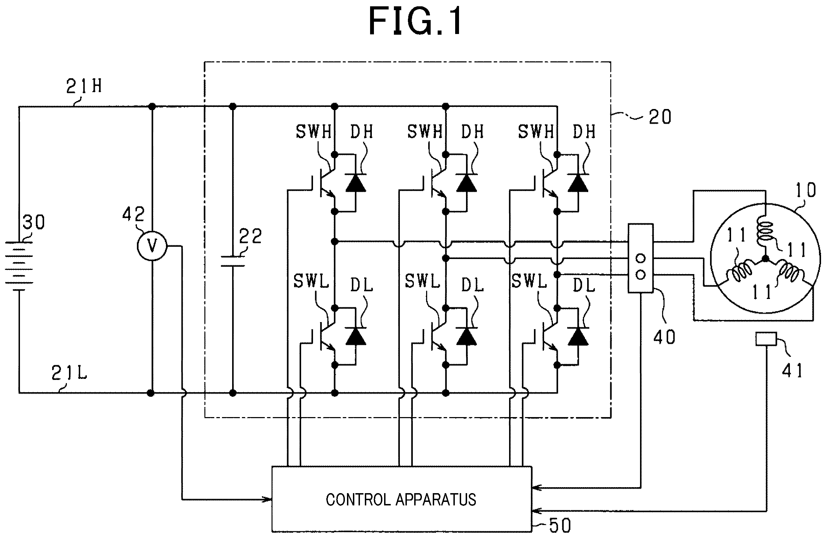

As shown in FIG. 1, the control system includes the rotating electric machine 10 and an inverter 20. The rotating electric machine 10 is an in-vehicle main machine which includes a rotor capable of transmitting mechanical power to driving wheels (not shown) of the vehicle. In the present embodiment, the rotating electric machine 10 is configured as a synchronous machine, more particularly as a permanent magnet synchronous machine.

The inverter 20 includes three serially-connected switch units provided respectively for three phases; each of the serially-connected switch units consists of an upper-arm switch SWH and a lower-arm switch SWL. The rotating electric machine 10 includes three stator windings 11 provided respectively for the three phases. For each of the three phases, a first end of the stator winding 11 of the phase is connected to a junction point between the upper-arm and lower-arm switches SWH and SWL of the phase. On the other hand, all of second ends of the stator windings 11 of the three phases are connected together at a neutral point. Moreover, the stator windings 11 of the three phases are arranged so as to be offset from each other by 120° in electrical angle. In the present embodiment, each of the upper-arm and lower-arm switches SWH and SWL is implemented by a voltage-controlled semiconductor switching element, more particularly by an IGBT. Moreover, each of the upper-arm and lower-arm switches SWH and SWL has a corresponding one of upper-arm and lower-arm diodes DH and DL connected in antiparallel thereto; each of the upper-arm and lower-arm diodes DH and DL is a freewheeling diode.

Each of the upper-arm switches SWH has its collector, which is a higher-potential-side terminal, connected to a positive electrode terminal of a DC power supply 30 via a higher-potential-side electrical path 21H. On the other hand, each of the lower-arm switches SWL has its emitter, which is a lower-potential-side terminal, connected to a negative electrode terminal of the DC power supply 30 via a lower-potential-side electrical path 21L. In the present embodiment, the DC power supply 30 is implemented by a secondary battery whose output voltage (or rated voltage) is, for example, 100V or higher.

The inverter 20 includes a smoothing capacitor 22. The smoothing capacitor 22 electrically connects the higher-potential-side electrical path 21H and the lower-potential-side electrical path 21L.

The control system further includes a current sensor 40, an angle sensor 41 and a voltage sensor 42. The current sensor 40 detects at least two of the three phase currents flowing in the rotating electric machine 10. The angle sensor 41 detects the electrical angle of the rotating electric machine 10. The angle sensor 41 is implemented by, for example, a resolver. The voltage sensor 42 detects a power supply voltage VDC which is the terminal voltage of the smoothing capacitor 22. The detected values of the sensors 40 to 42 are inputted to the control apparatus 50.

The control apparatus 50 operates the inverter 20 so as to control a controlled variable of the rotating electric machine 10 into agreement with a torque command value Trq*. Specifically, to turn on and off the upper-arm and lower-arm switches SWH and SWL of each phase of the inverter 20, the control apparatus 50 generates upper-arm and lower-arm drive signals GH and GL which respectively correspond to the upper-arm and lower-arm switches SWH and SWL. Each of the upper-arm and lower-arm drive signals GH and GL indicates either an ON command or an OFF command. Moreover, the upper-arm and lower-arm drive signals GH and GL of each phase alternately indicate the ON command.

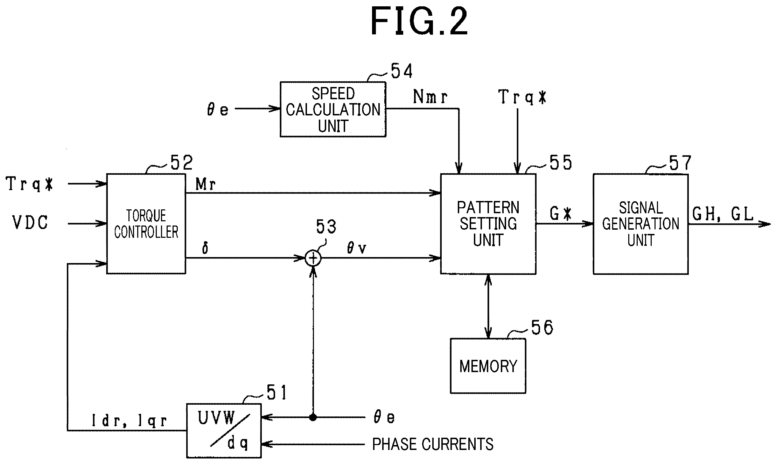

FIG. 2 is a block diagram illustrating a drive signal generation process performed by the control apparatus 50.

A two-phase conversion unit 51 converts, based on the phase currents detected by the current sensor 40 and the electrical angle $\theta e$ detected by the angle sensor 41, the U-phase, V-phase and W-phase currents in a three-phase fixed coordinate system into d-axis current Idr and q-axis current Iqr in a two-phase rotating coordinate system (i.e., a dq coordinate system).

A torque controller 52 calculates, based on the torque command value Trq*, the d-axis and q-axis currents Idr and Iqr and the power supply voltage VDC detected by the voltage sensor 42, both a phase command value $\delta$ and a modulation-rate command value Mr of the inverter 20. The phase command value $\delta$ is a command value for the phase of the output voltage vector Vdq in the dq coordinate system.

Specifically, the torque controller 52 first calculates a d-axis command voltage Vd and a q-axis command voltage Vq in the dq coordinate system as manipulated variables for feedback-controlling the d-axis and q-axis currents Idr and Iqr to d-axis and q-axis current command values that depend on the torque command value Trq*. Then, the torque controller 52 calculates the phase command value $\delta$ based on the calculated d-axis and q-axis command voltages Vd and Vq.

Moreover, the torque controller 52 also calculates the amplitude Vr of the output voltage vector Vdq based on the calculated d-axis and q-axis command voltages Vd and Vq. Then, the torque controller 52 calculates the modulation-rate command value Mr based on the calculated amplitude Vr and the power supply voltage VDC. The modulation-rate command value Mr is a value obtained by normalizing the amplitude Vr with the power supply voltage VDC. The modulation-rate command value Mr can be represented by, for example, the following Equation (1).

[Equation 1]

$$\mathrm{Mr} = \frac{1}{\sqrt{1.5}} \frac{Vr}{\frac{VDC}{2}} \quad \cdots \quad (eq1)$$

An angle calculation unit 53 calculates, by adding the electrical angle $\theta e$ to the phase command value $\delta$, the actual phase $\theta v$ of the output voltage vector Vdq with respect to the fixed coordinate system (e.g., with respect to the U phase of the fixed coordinate system).

A speed calculation unit 54 calculates, based on the electrical angle $\theta e$, the rotational speed Nmr of the rotor of the rotating electric machine 10.

A pattern setting unit 55 sets, based on the modulation-rate command value Mr, the actual phase $\theta v$, the rotational speed Nmr of the rotor, the torque command value Trq* and information stored in a memory 56, a pulse pattern G* for each phase in one electrical angle cycle. The pulse pattern G* is a time-series pattern by which a switching pattern of the upper-arm and lower arm switches SWH and SWL is defined. In the present embodiment, the pulse pattern G* is implemented by a binary PWM signal consisting of logics H and L. One of the logics H and L represents the ON command while the other of the logics H and L represents the OFF command. More particularly, in the present embodiment, the logic H represents the ON command and the logic L represents the OFF command.

The memory 56, which serves as a "storage unit", stores as map information a plurality of pulse patterns associated with the actual phase $\theta v$, the modulation-rate command value Mr, the rotational speed Nmr of the rotor and the torque command value Trq*. The memory 56 is implemented by a non-transitory tangible recording medium other than ROM (e.g., a nonvolatile memory other than ROM).

The pattern setting unit 55 acquires one of the pulse patterns stored in the memory 56 as the pulse pattern G*. The pattern setting unit 55 outputs to a signal generation unit 57 a signal of the acquired pulse pattern G* which corresponds to the actual phase $\theta v$ inputted from the angle calculation unit 53.

The signal generation unit 57 corresponds to a "switch control unit". The signal generation unit 57 first generates, based on the inputted pulse pattern G* and a logically inverted signal thereof, the upper-arm and lower-arm drive signals GH and GL of a first one of the three phases. Specifically, the signal generation unit 57 generates, as the upper-arm drive signal GH of the first phase, a signal by delaying timings, at which the logic is inverted to H, by a dead time in the inputted pulse pattern G*. Moreover, the signal generation unit 57 also generates, as the lower-arm drive signal GL of the first phase, a signal by delaying timings, at which the logic is inverted to H, by the dead time in the logically inverted signal of the inputted pulse pattern G*. Then, the signal generation unit 57 generates the upper-arm and lower-arm drive signals GH and GL of a second one of the three phases by shifting the phases of the upper-arm and lower-arm drive signals GH and GL of the first phase by 120° in electrical angle; and it also generates the upper-arm and lower-arm drive signals GH and GL of a third one of the three phases by shifting the phases of the upper-arm and lower-arm drive signals GH and GL of the first phase by 240° in electrical angle. Thereafter, all the generated upper-arm and lower-arm drive signals GH and GL are outputted, as PWM signals, respectively to gates of the upper-arm and lower-arm switches SWH and SWL of the three phases.

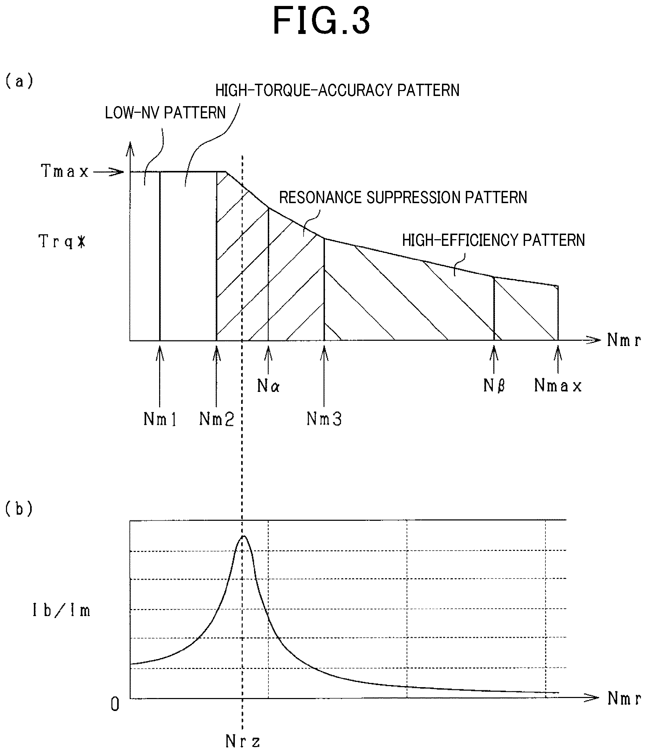

In the memory 56, there are stored, as pulse patterns, low-NV patterns corresponding to a low-NV region, high-torque-accuracy patterns corresponding to a high-torque-accuracy region, resonance suppression patterns corresponding to a resonance suppression region and high-efficiency patterns corresponding to a high-efficiency region as shown in FIG. 3(a).

In FIG. 3(a), there is shown an operation region of the rotating electric machine 10 which is defined by the rotational speed Nmr of the rotor and the torque command value Trq*. Here, Tmax, which delimits the operation region, is the maximum value of the possible range of the torque command value Trq* (hereinafter, to be referred to as the maximum torque); and Nmax, which also delimits the operation region, is the maximum value of the possible range of the rotational speed Nmr of the rotor (hereinafter, to be referred to as the maximum rotational speed). The operation region of the rotating electric machine 10 includes the low-NV region, the high-torque-accuracy region, the resonance suppression region and the high-efficiency region that are located in this order from the lower speed side to the higher speed side.

In the case of the rotational speed Nmr of the rotor being determined to be lower than or equal to a first speed threshold Nm1, the pattern setting unit 55 acquires, from the memory 56, the low-NV pattern corresponding to the modulation-rate command value Mr and sets the pulse pattern to be outputted to the signal generation unit 57 to the acquired low-NV pattern.

The low-NV pattern is a pulse pattern for reducing noise and vibration generated due to the torque control of the rotating electric machine 10. The low-NV pattern may be, for example, a pulse pattern described in Japanese Patent Application Publication No. JP2013215041A. Specifically, the low-NV pattern is a pulse pattern defined by imposing a requirement to reduce, of harmonic components contained in the Fourier-analyzed pulse pattern, the harmonic components of specific orders included in a specific frequency range. More specifically, the low-NV pattern is a pulse pattern defined by imposing a requirement to reduce the harmonic components of the specific orders in the specific frequency range to zero. The low-NV pattern may be, for example, a pulse pattern such that the signal in the range of 0 to 180 degrees and the signal in the range of 180 to 360 degrees are axisymmetrical with respect to an axis passing through an electrical angle of 180°. The specific frequency range is a part of the human audible range. For example, the specific frequency range may be a frequency range lower than or equal to 1kHz. The harmonic components included in the specific frequency range may be, for example, the fifth-order and seventh-order harmonic components.

The low-NV region corresponding to the low-NV pattern is a lowest-speed part of the operation region of the rotating electric machine 10. Moreover, in the operation region of the rotating electric machine 10, the high-torque-accuracy region, which will be described in detail later, is located on the higher speed side of and adjacent to the low-NV pattern. Furthermore, in the operation region of the rotating electric machine 10, the first speed threshold Nm1 represents the boundary between the low-NV region and the high-torque-accuracy region.

In the low-NV region, the road noise generated with traveling of the vehicle is relatively low and thus noise in the human audible range tends to become problematic. In this regard, with the low-NV pattern, this problem can be solved.

In the case of the rotational speed Nmr of the rotor being determined to be higher than the first speed threshold Nm1 and lower than or equal to a second speed threshold Nm2 (> Nm1), the pattern setting unit 55 acquires, from the memory 56, the high-torque-accuracy pattern corresponding to the modulation-rate command value Mr and sets the pulse pattern to be outputted to the signal generation unit 57 to the acquired high-torque-accuracy pattern.

The high-torque-accuracy pattern may be, for example, a pulse pattern described in Japanese Patent Application Publication No. JP2016189648A and its gazetted patent, i.e., Japanese Patent No. JP6390489B2. Specifically, the high-torque-accuracy pattern is a pulse pattern defined by imposing first and second requirements that are generation requirements of the upper-arm and lower-arm drive signals GH and GL for supplying AC current to the rotating electric machine 10. The first requirement is a requirement to fix, in a predetermined control cycle of the control apparatus 50, the drive state of the upper-arm and lower-arm switches SWH and SWL corresponding to the maximum phase whose phase voltage is highest among the three phases of the inverter 20. The first requirement is a requirement for reducing the number of times of switching and thus the switching loss.

The second requirement is a requirement to increase, in the control cycle, the number of times of switching of the upper-arm and lower-arm switches SWH and SWL corresponding to the minimum phase, whose phase voltage is lowest among the three phases of the inverter 20, more than the number of times of switching of the upper-arm and lower-arm switches SWH and SWL corresponding to the intermediate phase that is the one of the three phases other than the maximum phase and the minimum phase and to perform, in each of two periods obtained by bisecting the control cycle, switching control of the upper-arm and lower-arm switches SWH and SWL corresponding to the minimum phase and the intermediate phase. The second requirement is a requirement for suppressing decrease in the number of times of switching due to the imposition of the first requirement and improving the effect of suppressing harmonic components while minimizing increase in the switching loss. By imposing the second requirement, it is possible to suppress increase in the switching loss; this is because the minimum phase is selected as the phase for increasing the number of times of switching in consideration of the fact that the lower the phase current(s) of the switched phase(s), the lower the switching loss.

The number of pulses included in the high-torque-accuracy pattern is less than the number of pulses included in the low-NV pattern. The number of pulses included in a pulse pattern may be represented by, for example, the number of times the logic of the signal is inverted from L to H in the pulse pattern in one electrical angle cycle. With the high-torque-accuracy pattern, the number of times of switching per electrical angle cycle becomes greater than that in the case of a two-phase modulation and less than that in the case of a three-phase modulation.

As shown in FIG. 3(a), in the operation region of the rotating electric machine 10, the resonance suppression region, which will be described in detail later, is located on the higher speed side of and adjacent to the high-torque-accuracy region. Moreover, in the operation region of the rotating electric machine 10, the second speed threshold Nm2 represents the boundary between the high-torque-accuracy region and the resonance suppression region.

In the high-torque-accuracy region, the torque command value Trq* tends to become large and therefore torque ripple of the rotating electric machine 10 tends to become problematic. In this regard, with the high-torque-accuracy pattern, this problem can be solved.

In the case of the rotational speed Nmr of the rotor being determined to be higher than the second speed threshold Nm2 and lower than or equal to a third speed threshold Nm3 (> Nm2), the pattern setting unit 55 acquires, from the memory 56, the resonance suppression pattern corresponding to the modulation-rate command value Mr and sets the pulse pattern to be outputted to the signal generation unit 57 to the acquired resonance suppression pattern.

The resonance suppression pattern may be, for example, a pulse pattern described in Japanese Patent No. JP6221958B2. Specifically, the resonance suppression pattern is a pulse pattern defined by imposing a requirement to reduce, of harmonic components of electric current flowing between the DC power supply 30 and the smoothing capacitor 22 via the electrical paths 21H and 21L, the harmonic components of specific orders in the vicinity of a resonant frequency of an LC resonant circuit; the LC resonant circuit includes the DC power supply 30, the higher-potential-side electrical path 21H, the smoothing capacitor 22 and the lower-potential-side electrical path 21L. In the present embodiment, the harmonic components of the specific orders in the vicinity of the resonant frequency are the sixth-order and the twelfth-order harmonic components.

As shown in FIG. 3(a), in the operation region of the rotating electric machine 10, the high-efficiency region, which will be described in detail later, is located on the higher speed side of and adjacent to the resonance suppression region. Moreover, in the operation region of the rotating electric machine 10, the third speed threshold Nm3 represents the boundary between the resonance suppression region and the high-efficiency region.

FIG. 3(b) shows the frequency characteristic Ib/Im of the LC resonant circuit. Here, Im represents electric current flowing from the connection point with the smoothing capacitor 22 to the inverter 20 side in the high-potential-side electrical path 21H; and Ib represents electric current flowing through the DC power supply 30. From the frequency characteristic, it is possible to determine the magnitude of ripple of the DC current. Moreover, in FIG. 3(b), Nrz represents the resonant rotational speed obtained by converting the resonant frequency of the LC resonant circuit into the dimension of the rotational speed of the rotor. The resonant rotational speed Nrz is higher than the second speed threshold Nm2 and lower than the third speed threshold Nm3.

The number of pulses included in the resonance suppression pattern is less than the number of pulses included in the high-torque-accuracy pattern. In the present embodiment, the number of pulses included in the resonance suppression pattern in that part of the resonance suppression region which is higher than the second speed threshold Nm2 and lower than or equal to a first intermediate threshold Nα (< Nm3) is greater than the number of pulses included in the resonance suppression pattern in that part of the resonance suppression region which is higher than the first intermediate threshold Nα and lower than or equal to the third speed threshold Nm3.

In the resonance suppression region, the DC current flowing through the DC power supply 30 and the terminal voltage of the smoothing capacitor 22 tend to fluctuate greatly and thus a failure may occur in the inverter 20 or the like. In this regard, with the resonance suppression pattern, this problem can be solved.

In the case of the rotational speed Nmr of the rotor being determined to be higher than the third speed threshold Nm3 and lower than or equal to the maximum rotational speed Nmax (> Nm3), the pattern setting unit 55 acquires, from the memory 56, the high-efficiency pattern corresponding to the modulation-rate command value Mr and sets the pulse pattern to be outputted to the signal generation unit 57 to the acquired high-efficiency pattern.

The high-efficiency pattern is a pulse pattern for reducing the loss occurring in the rotating electric machine 10. The high-efficiency pattern may be, for example, a pulse pattern described in Japanese Patent Application Publication No. JP2016136838A. Specifically, the high-efficiency pattern is a pulse pattern defined by imposing a requirement to reduce, of the harmonic components contained in the Fourier-analyzed pulse pattern, the harmonic components of specific orders which cause an increase in the loss (i.e., the iron loss) occurring in the rotating electric machine 10. More specifically, the high-efficiency pattern is a pulse pattern defined by imposing a requirement to reduce the harmonic components of the specific orders to zero. The high-efficiency pattern may be, for example, a pulse pattern such that the signal in the range of 0 to 180 degrees and the signal in the range of 180 to 360 degrees are axisymmetrical with respect to the axis passing through the electrical angle of 180°. The harmonic components of the specific orders may be, for example, the fifth-order and seventh-order harmonic components.

The number of pulses included in the high-efficiency pattern is less than the number of pulses included in the resonance suppression pattern. As shown in FIG. 3(a), in the present embodiment, the number of pulses included in the high-efficiency pattern in that part of the high-efficiency region which is higher than the third speed threshold $Nm3$ and lower than or equal to a second intermediate threshold $N\beta$ (< $Nmax$) is greater than the number of pulses included in the high-efficiency pattern in that part of the high-efficiency region which is higher than the second intermediate threshold $N\beta$ and lower than or equal to the maximum rotational speed $Nmax$.

In the high-efficiency region, the electrical angle frequency of the rotating electric machine 10 becomes high and thus the number of times of switching per electrical angle cycle becomes small. Consequently, the ripple of the phase currents may become high and thus the iron loss of the rotating electric machine 10 may tend to increase. In this regard, with the high-efficiency pattern, this problem can be solved.

Each of the low-NV pattern, the high-torque-accuracy pattern, the resonance suppression pattern and the high-efficiency pattern may be set so that the amplitude of the fundamental component contained in the pattern is equal to the modulation-rate command value $Mr$. In addition, in the present embodiment, each of the low-NV region, the high-torque-accuracy region, the resonance suppression region and the high-efficiency region corresponds to an "individual region".

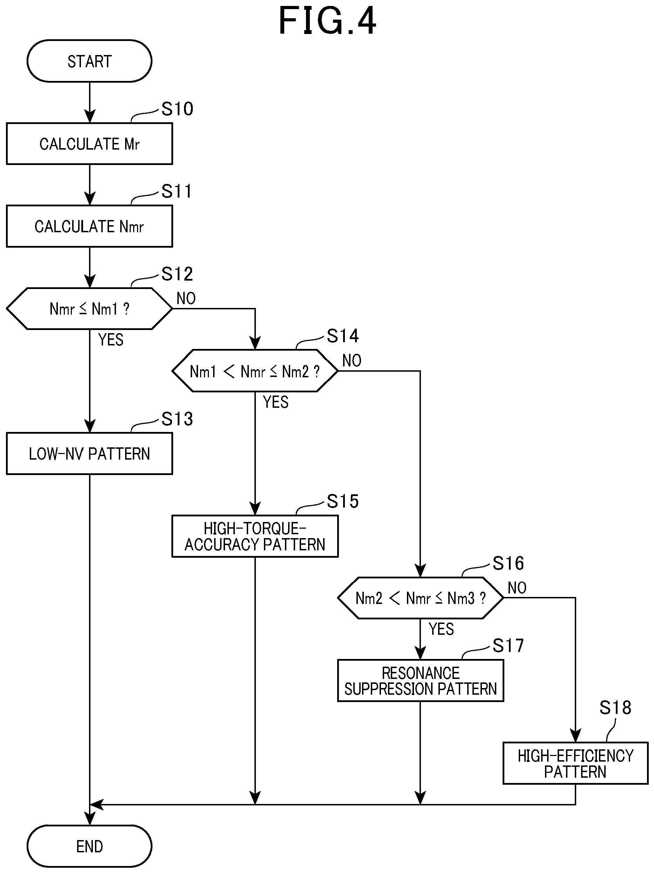

FIG. 4 illustrates steps of a pulse pattern setting process. This process is performed by the control apparatus 50 at a predetermined control cycle.

In step S10, the torque controller 52 calculates the modulation-rate command value $Mr$.

In step S11, the speed calculation unit 54 calculates the rotational speed $Nmr$ of the rotor.

In steps S12 to S18, the pattern setting unit 55 performs various processes. Specifically, in step S12, it is determined whether the calculated rotational speed $Nmr$ of the rotor is lower than or equal to the first speed threshold $Nm1$. If the result of the determination in step S12 is affirmative, the pulse pattern setting process proceeds to step S13. In step S13, the low-NV pattern corresponding to the calculated modulation-rate command value $Mr$ is acquired from the memory 56: and the pulse pattern to be outputted to the signal generation unit 57 is set to the acquired low-NV pattern. In addition, in the present embodiment, the rotational speed $Nmr$ of the rotor corresponds to a "determination parameter" that indicates the operating point of the rotating electric machine 10.

If the result of the determination in step S12 is negative, the pulse pattern setting process proceeds to step S14. In step S14, it is determined whether the rotational speed $Nmr$ of the rotor is higher than the first speed threshold $Nm1$ and lower than or equal to the second speed threshold $Nm2$. If the result of the determination in step S14 is affirmative, the pulse pattern setting process proceeds to step S15. In step S15, the high-torque-accuracy pattern corresponding to the calculated modulation-rate command value $Mr$ is acquired from the memory 56: and the pulse pattern to be outputted to the signal generation unit 57 is set to the acquired high-torque-accuracy pattern.

If the result of the determination in step S14 is negative, the pulse pattern setting process proceeds to step S16. In step S16, it is determined whether the rotational speed $Nmr$ of the rotor is higher than the second speed threshold $Nm2$ and lower than or equal to the third speed threshold $Nm3$. If the result of the determination in step S16 is affirmative, the pulse pattern setting process proceeds to step S17. In step S17, the resonance suppression pattern corresponding to the calculated modulation-rate command value $Mr$ is acquired from the memory 56: and the pulse pattern to be outputted to the signal generation unit 57 is set to the acquired resonance suppression pattern.

If the result of the determination in step S16 is negative, the rotational speed $Nmr$ of the rotor is determined to be higher than the third speed threshold $Nm3$; then the pulse pattern setting process proceeds to step S18. In step S18, the high-efficiency pattern corresponding to the calculated modulation-rate command value $Mr$ is acquired from the memory 56: and the pulse pattern to be outputted to the signal generation unit 57 is set to the acquired high-efficiency pattern.

As described above, in the present embodiment, in the low-NV region, the high-torque-accuracy region, the resonance suppression region and the high-efficiency region, the pulse patterns are respectively defined by imposing the requirements according to the problems to be solved. Consequently, it becomes possible to perform the switching control of the inverter 20 according to each of the regions; thus, it becomes possible to properly perform the torque control of the rotating electric machine 10.

(Second Embodiment)

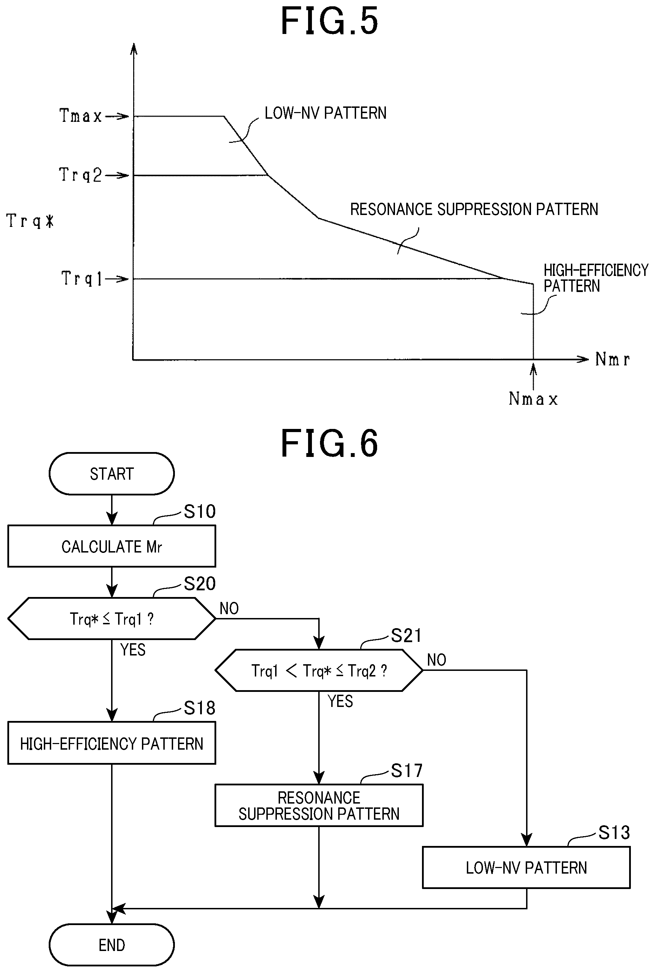

Hereinafter, a second embodiment will be described with reference to the drawings, focusing on the differences thereof from the first embodiment. In the present embodiment, as shown in FIG. 5, the pattern setting unit 55 selects a pulse pattern group based on the torque command value Trq* instead of the rotational speed Nmr of the rotor. FIG. 6 illustrates steps of this selection process. It should be noted that for the sake of convenience, in FIG. 6, the same reference signs are assigned to the same steps as those shown in FIG. 4.

After completion of step S10, in step S20, it is determined whether the torque command value Trq* is smaller than or equal to a first torque threshold Trq1. The first torque threshold Trq1 represents the boundary between the high-efficiency region and the resonance suppression region in the operation region of the rotating electric machine 10. If the result of the determination in step S20 is affirmative, the process proceeds to step S18. In step S18, the high-efficiency pattern corresponding to the modulation-rate command value Mr is acquired from the memory 56: and the pulse pattern to be outputted to the signal generation unit 57 is set to the acquired high-efficiency pattern. In addition, in the present embodiment, the torque command value Trq* corresponds to a "determination parameter" that indicates the operating point of the rotating electric machine 10.

If the result of the determination in step S20 is negative, the process proceeds to step S21. In step S21, it is determined whether the torque command value Trq* is larger than the first torque threshold Trq1 and smaller than or equal to a second torque threshold Trq2 (> Trq1). The second torque threshold Trq2 represents the boundary between the resonance suppression region and the low-NV region in the operation region of the rotating electric machine 10. If the result of the determination in step S21 is affirmative, the process proceeds to step S17. In step S17, the resonance suppression pattern corresponding to the modulation-rate command value Mr is acquired from the memory 56: and the pulse pattern to be outputted to the signal generation unit 57 is set to the acquired resonance suppression pattern.

If the result of the determination in step S21 is negative, the torque command value Trq* is determined to be larger than the second torque threshold Trq2 and smaller than or equal to the maximum torque Tmax; then the process proceeds to step S13. In step S13, the low-NV pattern corresponding to the modulation-rate command value Mr is acquired from the memory 56: and the pulse pattern to be outputted to the signal generation unit 57 is set to the acquired low-NV pattern.

According to the present embodiment described above, it is possible to achieve advantageous effects similar to those achievable according to the first embodiment.

(Third Embodiment)

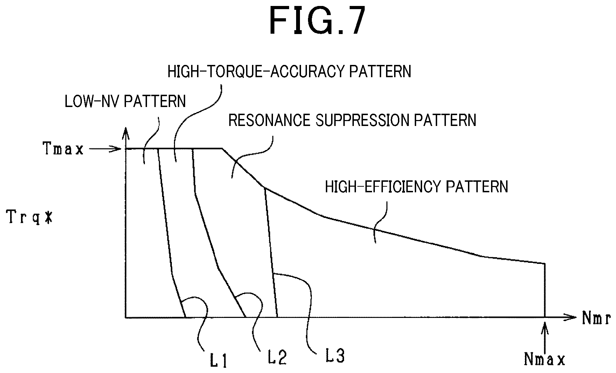

Hereinafter, a third embodiment will be described with reference to the drawings, focusing on the differences thereof from the first embodiment. In the present embodiment, as shown in FIG. 7, the pattern setting unit 55 selects a pulse **pattern** group by comparing the rotational speed Nmr of the rotor with thresholds L1 to L3. Each of the thresholds L1 to L3 decreases with increase in the torque command value Trq*.

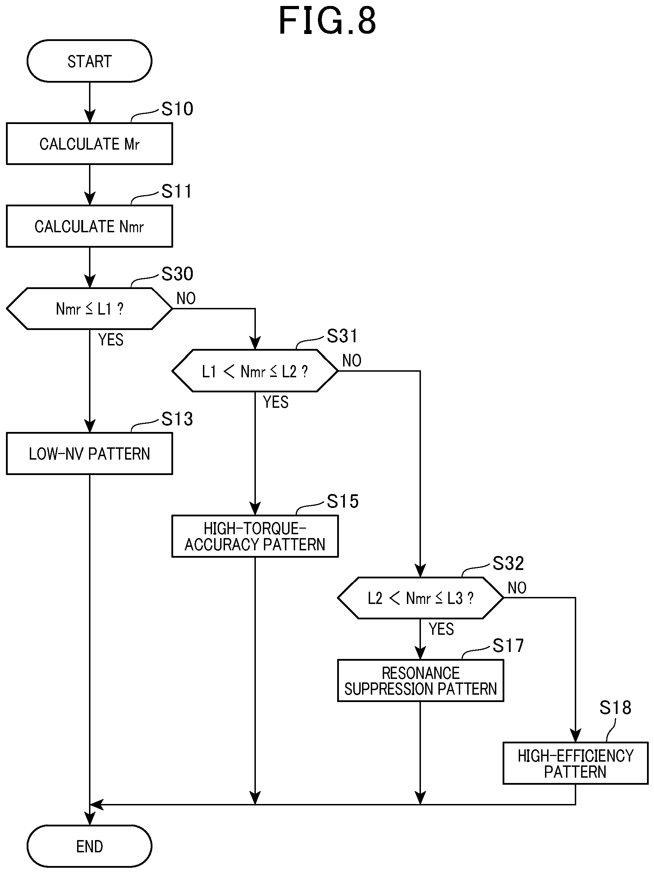

FIG. 8 illustrates steps of a pulse pattern setting process according to the present embodiment. This process is performed by the control apparatus 50 at a predetermined control cycle. It should be noted that for the sake of convenience, in FIG. 8, the same reference signs are assigned to the same steps as those shown in FIG. 4.

The process from step S30 on is performed by the pattern setting unit 55. In step S30, it is determined whether the calculated rotational speed Nmr of the rotor is lower than or equal to the first threshold L1. Here, the larger the torque command value Trq*, the lower the first threshold L1 is set to be. The first threshold L1 represents the boundary between the low-NV region and the high-torque-accuracy region. If the result of the determination in step S30 is affirmative, the process proceeds to step S13. In addition, in the present embodiment, both the rotational speed Nmr of the rotor and the torque command value Trq* correspond to "determination parameters" that indicate the operating point of the rotating electric machine 10.

If the result of the determination in step S30 is negative, the process proceeds to step S31. In step S31, it is determined whether the rotational speed Nmr of the rotor is higher than the first threshold L1 and lower than or equal to the second threshold L2 (> L1). Here, the larger the torque command value Trq*, the lower the second threshold L2 is set to be. The second threshold L2 represents the boundary between the high-torque-accuracy region and the resonance suppression region. If the result of the determination in step S31 is affirmative, the process proceeds to step S15.

If the result of the determination in step S31 is negative, the process proceeds to step S32. In step S32, it is determined whether the rotational speed Nmr of the rotor is higher than the second threshold L2 and lower than or equal to the third threshold L3 (> L2). Here, the larger the torque command value Trq*, the lower the third threshold L3 is set to be. The third threshold L3 represents the boundary between the resonance suppression region and the high-efficiency region. If the result of the determination in step S32 is affirmative, the process proceeds to step S17.

If the result of the determination in step S32 is negative, the rotational speed Nmr of the rotor is determined to be higher than the third threshold L3 and lower than or equal to the maximum rotational speed Nmax: then the process proceeds to step S18.

According to the present embodiment described above, it is possible to achieve the same advantageous effects as achievable according to the first embodiment.

(Fourth Embodiment)

Hereinafter, a fourth embodiment will be described with reference to the drawings, focusing on the differences thereof from the first embodiment. In the present embodiment, the pattern setting unit 55 performs a correction process of increasing the first speed threshold Nm1, the second speed threshold Nm2 and the third speed threshold Nm3 with increase in the power supply voltage VDC. This process is performed in consideration of the fact that the higher the power supply voltage VDC, the smaller the modulation-rate command value Mr and the greater the number of times of switching required per electrical angle cycle.

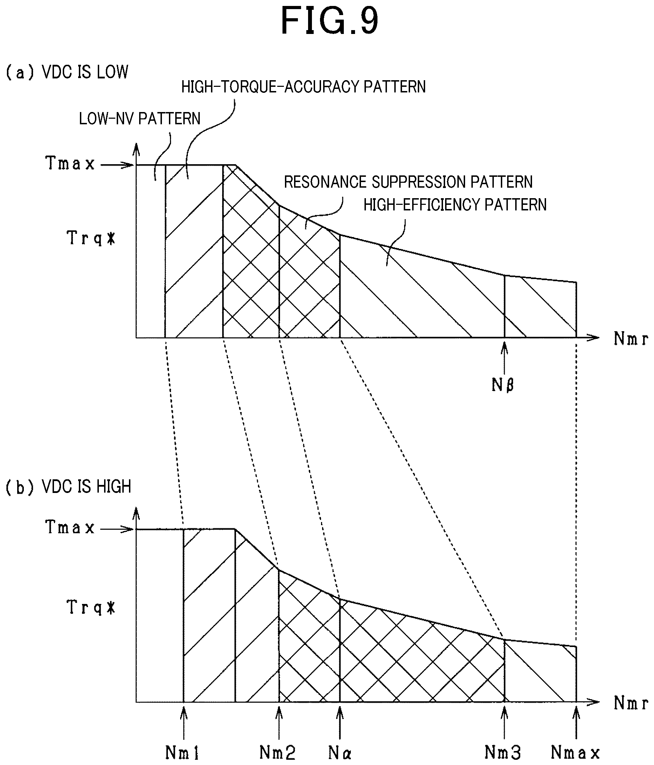

FIG. 9 shows the speed thresholds Nm1 to Nm3 both when the power supply voltage VDC is low and when the power supply voltage VDC is high. For example, the first speed threshold Nm1, which represents the boundary between the low-NV region and the high-torque-accuracy region, is corrected when the power supply voltage VDC is high to the higher speed side than when the power supply voltage VDC is low. It should be noted that FIG. 9 illustrates an example where the second intermediate threshold Nβ disappears as a result of the correction to the higher speed side.

According to the present embodiment described above, it is possible to properly set, according to the power supply voltage VDC, the number of times of switching of each phase required for bringing the actual modulation rate into agreement with the modulation-rate command value Mr. Consequently, the torque controllability of the rotating electric machine 10 can be improved.

(Fifth Embodiment)

Hereinafter, a fifth embodiment will be described with reference to the drawings, focusing on the differences thereof from the first embodiment. In the present embodiment, an update process is performed to update each of the speed thresholds Nm1 to Nm3 used in the process shown in FIG. 4.

In the update process, four evaluation functions are used which respectively correspond to the low-NV pattern, the high-torque-accuracy pattern, the resonance suppression pattern and the high-efficiency pattern. The evaluation functions have values defined in the same dimension (e.g., dimensionless). In the present embodiment, for each of the evaluation functions, the smaller the value of the evaluation function, the higher the priority of using the pulse pattern corresponding to the evaluation function is set to be. For example, when the value of the evaluation function corresponding to the low-NV pattern is smaller than the value of the evaluation function corresponding to the high-torque-accuracy pattern, the priority of using the low-NV pattern is set to be higher than the priority of using the high-torque-accuracy pattern; thus, the first speed threshold Nm1 is corrected to be increased. That is, that part of the operation region of the rotating electric machine 10 which is occupied by the low-NV region is expanded.

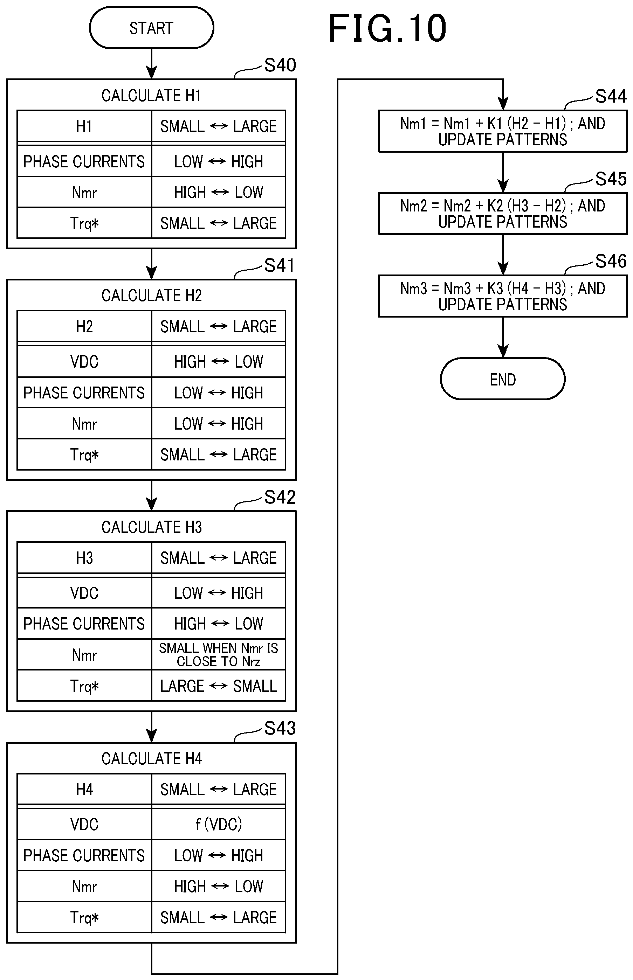

FIG. 10 illustrates steps of the update process for updating the speed thresholds Nm1 to Nm3. This process is performed by the control apparatus 50 at a predetermined control cycle.

In step S40, the value of the first evaluation function H1 corresponding to the low-NV pattern is calculated. Specifically, the higher the phase currents (more specifically, e.g., the amplitudes or effective values of the phase currents) detected by the current sensor 40, the larger the value of the first evaluation function H1 is calculated to be. For example, the value of the first evaluation function H1 is calculated such that "H1 $\propto$ phase currents". That is, the higher the phase currents, the lower the priority of the low-NV pattern with respective to the high-torque-accuracy pattern is set to be. More specifically, the higher the phase currents, the higher the harmonic components contained in the phase currents become and therefore the higher the priority of the high-torque-accuracy pattern, which has a higher effect of reducing the harmonic components contained in the phase currents than the low-NV pattern, is set to be.

Moreover, the higher the rotational speed Nmr of the rotor, the smaller the value of the first evaluation function H1 is calculated to be. For example, the value of the first evaluation function H1 is calculated such that "H1 $\propto$ 1/Nmr". That is, the higher the rotational speed Nmr of the rotor, the higher the priority of the low-NV pattern with respective to the high-torque-accuracy pattern is set to be. More specifically, the lower the rotational speed Nmr of the rotor, the lower the frequency of the vehicle vibration generated with drive of the rotating electric machine 10 becomes. Further, the lower the frequency of the vehicle vibration, the lower the degree of the vehicle user feeling sway of the vehicle becomes. Therefore, the higher the rotational speed Nmr of the rotor, the higher the priority of the low-NV pattern is set to be over the high-torque-accuracy pattern.

Furthermore, the larger the torque command value Trq*, the larger the value of the first evaluation function H1 is calculated to be. For example, the value of the first evaluation function H1 is calculated such that "H1 $\propto$ Trq*". That is, the larger the torque command value Trq*, the higher the phase currents become and therefore the lower the priority of the low-NV pattern with respective to the high-torque-accuracy pattern is set to be.

In step S41, the value of the second evaluation function H2 corresponding to the high-torque-accuracy pattern is calculated. Specifically, the higher the power supply voltage VDC, the smaller the value of the second evaluation function H2 is calculated to be. For example, the value of the second evaluation function H2 is calculated such that "H2 $\propto$ 1/VDC". More specifically, the higher the power supply voltage VDC, the smaller the modulation-rate command value Mr becomes and thus the wider that part of the operation region of the rotating electric machine 10 in which a PWM control is performed becomes. With the PWM control, the number of times of switching per electrical angle cycle becomes greater and thus the torque of the rotating electric machine 10 can be more accurately controlled than with an overmodulation control or a rectangular-wave control. Therefore, the higher the power supply voltage VDC, the higher the priority of the high-torque-accuracy pattern with respect to the low-NV pattern and the resonance suppression pattern is set to be.

Moreover, the higher the phase currents (more specifically, e.g., the amplitudes or effective values of the phase currents) detected by the current sensor 40, the larger the value of the second evaluation function H2 is calculated to be. For example, the value of the second evaluation function H2 is calculated such that "H2 $\propto$ phase currents". More specifically, the higher the phase currents, the larger the detection errors included in the detected values of the current sensor 40 become. Further, the larger the detection errors, the lower the necessity of using the high-torque-accuracy pattern becomes. Therefore, the higher the phase currents, the lower the priority of the high-torque-accuracy pattern with respect to the low-NV pattern and the resonance suppression pattern is set to be.

Furthermore, the higher the rotational speed Nmr of the rotor, the larger the value of the second evaluation function H2 is calculated to be. For example, the value of the second evaluation function H2 is calculated such that "H2 $\propto$ Nmr". More specifically, in a region where the rotational speed Nmr of the rotor is low, it is easy to perform the PWM control. With the PWM control, the number of times of switching per electrical angle cycle becomes greater and thus the torque of the rotating electric machine 10 can be more accurately controlled than with an overmodulation control or a rectangular-wave control. Therefore, the lower the rotational speed Nmr of the rotor, the higher the priority of the high-torque-accuracy pattern with respect to the low-NV pattern and the resonance suppression pattern is set to be.

Furthermore, the larger the torque command value Trq*, the larger the value of the second evaluation function H2 is calculated to be. For example, the value of the second evaluation function H2 is calculated such that "H2 $\propto$ Trq*". That is, the larger the torque command value Trq*, the larger the detection errors included in the detected values of the current sensor 40 become and therefore the lower the priority of the high-torque-accuracy pattern with respect to the low-NV pattern and the resonance suppression pattern is set to be.

In step S42, the value of the third evaluation function H3 corresponding to the resonance suppression pattern is calculated. Specifically, the higher the power supply voltage VDC, the larger the value of the third evaluation function H3 is calculated to be. For example, the value of the third evaluation function H3 is calculated such that "H3 $\propto$ VDC". More specifically, the lower the power supply voltage VDC, the larger the modulation-rate command value Mr becomes and thus the higher the harmonic components contained in the phase currents become. The harmonic components cause the LC resonance described above. Therefore, the lower the power supply voltage VDC, the higher the priority of the resonance suppression pattern with respect to the high-torque-accuracy pattern and the high-efficiency pattern is set to be.

Moreover, the higher the phase currents (more specifically, e.g., the amplitudes or effective values of the phase currents) detected by the current sensor 40, the smaller the value of the third evaluation function H3 is calculated to be. More specifically, the higher the phase currents, the higher the harmonic components contained in the phase currents become. Therefore, the higher the phase currents, the higher the priority of the resonance suppression pattern with respect to the high-torque-accuracy pattern and the high-efficiency pattern is set to be.

Furthermore, when the rotational speed Nmr of the rotor is close to the resonant rotational speed Nrz, the value of the third evaluation function H3 is calculated to be small and thus the priority of the resonance suppression pattern is set to be high. For example, the closer the rotational speed Nmr of the rotor is to the resonant rotational speed Nrz, the smaller the value of the third evaluation function H3 is calculated to be.

Furthermore, the larger the torque command value Trq*, the smaller the value of the third evaluation function H3 is calculated to be. More specifically, the larger the torque command value Trq*, the higher the phase currents become and thus the higher the harmonic components contained in the phase currents become. Therefore, the larger the torque command value Trq*, the higher the priority of the resonance suppression pattern with respect to the high-torque-accuracy pattern and the high-efficiency pattern is set to be.

In step S43, the value of the fourth evaluation function H4 corresponding to the high-efficiency pattern is calculated. Specifically, the value of the fourth evaluation function H4 is calculated based on the power supply voltage VDC. For example, the value of the fourth evaluation function H4 may be calculated based on map information in which the power supply voltage VDC and the value of the fourth evaluation function H4 are associated with each other. More specifically, with increase in the power supply voltage VDC, although the switching loss increases and thus the efficiency of the inverter 20 is lowered, the field-weakening current decreases and thus the efficiency of the rotating electric machine 10 tends to increase. The above map information may be determined based on this tendency.

Moreover, the higher the phase currents (more specifically, e.g., the amplitudes or effective values of the phase currents) detected by the current sensor 40, the larger the value of the fourth evaluation function H4 is calculated to be. For example, the value of the fourth evaluation function H4 is calculated such that "H4 $\propto$ phase currents^2". More specifically, with increase in the phase currents, the copper losses in the inverter 20 and the rotating electric machine 10 increase. In this case, the priority of the high-efficiency pattern with respect to the resonance suppression pattern is lowered.

Furthermore, the higher the rotational speed Nmr of the rotor, the smaller the value of the fourth evaluation function H4 is calculated to be. That is, the higher the rotational speed Nmr of the rotor, the higher the iron loss becomes and therefore the higher the priority of the high-efficiency pattern with respect to the resonance suppression pattern is set to be.

Furthermore, the larger the torque command value Trq*, the larger the value of the fourth evaluation function H4 is calculated to be. For example, the value of the fourth evaluation function H4 is calculated such that "H4 $\propto$ Trq*". That is, the larger the torque command value Trq*, the higher the phase currents become and therefore the lower the priority of the high-efficiency pattern with respect to the resonance suppression pattern is set to be.

In step S44, the value of the first evaluation function H1 calculated in step S40 is subtracted from the value of the second evaluation function H2 calculated in step S41. Then, "H2 - H1" is multiplied by a first coefficient K1 (> 0). Thereafter, a value, which is obtained by adding "K1 $\times$ (H2 - H1)" as a correction amount to the current first speed threshold Nm1, is set as a new first speed threshold Nm1.

When the value of the first evaluation function H1 is smaller than the value of the second evaluation function H2, the low-NV pattern corresponding to the first evaluation function H1 has a higher priority than the high-torque-accuracy pattern corresponding to the second evaluation function H2. In this case, the first speed threshold Nm1 is corrected to be increased; and the low-NV region as a "lower speed region" is expanded to the higher speed side, whereas the high-torque-accuracy region as a "high speed region" is reduced.

In contrast, when the value of the second evaluation function H2 is smaller than the value of the first evaluation function H1, the high-torque-accuracy pattern has a higher priority than the low-NV pattern. In this case, the first speed threshold Nm1 is corrected to be lowered; and the high-torque-accuracy region is expanded to the lower speed side, whereas the low-NV region is reduced.

Moreover, in step S44, information on the low-NV pattern and the high-torque-accuracy pattern, which includes the new first speed threshold Nm1, is stored in the memory 56. Consequently, the information on the low-NV pattern and the high-torque-accuracy pattern is updated. The updated information is to be used in the process shown in FIG. 4.

In step S45, the value of the second evaluation function H2 calculated in step S41 is subtracted from the value of the third evaluation function H3 calculated in step S42. Then, "H3 - H2" is multiplied by a second coefficient K2 (> 0). Thereafter, a value, which is obtained by adding "K2 $\times$ (H3 - H2)" as a correction amount to the current second speed threshold Nm2, is set as a new second speed threshold Nm2.

Moreover, in step S45, information on the high-torque-accuracy pattern and the resonance suppression pattern, which includes the new second speed threshold Nm2, is stored in the memory 56. Consequently, the information on the high-torque-accuracy pattern and the resonance suppression pattern is updated.

In step S46, the value of the third evaluation function H3 calculated in step S42 is subtracted from the value of the fourth evaluation function H4 calculated in step S43. Then, "H4 - H3" is multiplied by a third coefficient K3 (> 0). Thereafter, a value, which is obtained by adding "K3 $\times$ (H4 - H3)" as a correction amount to the current third speed threshold Nm3, is set as a new third speed threshold Nm3.

Moreover, in step S46, information on the resonance suppression pattern and the high-efficiency pattern, which includes the new third speed threshold Nm3, is stored in the memory 56. Consequently, the information on the resonance suppression pattern and the high-efficiency pattern is updated.

According to the present embodiment described above, the pulse patterns stored in the memory 56 are updated based on the priorities respectively corresponding to the low-NV pattern, the high-torque-accuracy pattern, the resonance suppression pattern and the high-efficiency pattern. Consequently, it becomes possible to perform the switching control of the inverter 20 more properly according to each of the individual regions.

(Modifications of Fifth Embodiment)

In each of steps S40 to S43, the evaluation function is not limited to being calculated using all of the parameters described in the step, but may be calculated using only some of them.

Each of the evaluation functions may be defined such that the larger the value of the evaluation function, the higher the priority of using the pulse pattern corresponding to the evaluation function is set to be. In this case, taking step S44 as an example, the correction amount may be calculated as "K1 $\times$ (H1 - H2)".

The method of updating the speed thresholds is not limited to adding the correction amounts to the current speed thresholds. Taking the first speed threshold Nm1 as an example, a new first speed threshold Nm1 may be calculated by multiplying the current first speed threshold Nm1 by a correction coefficient that is calculated according to the first and second evaluation functions H1 and H2. In this case, the correction coefficient may be set to 1 when the value of the first evaluation function H1 and the value of the second evaluation function H2 are equal to each other, to a value smaller than 1 when the value of the first evaluation function H1 is larger than the value of the second evaluation function H2, and to a value larger than 1 when the value of the first evaluation function H1 is smaller than the value of the second evaluation function H2.

(Sixth Embodiment)

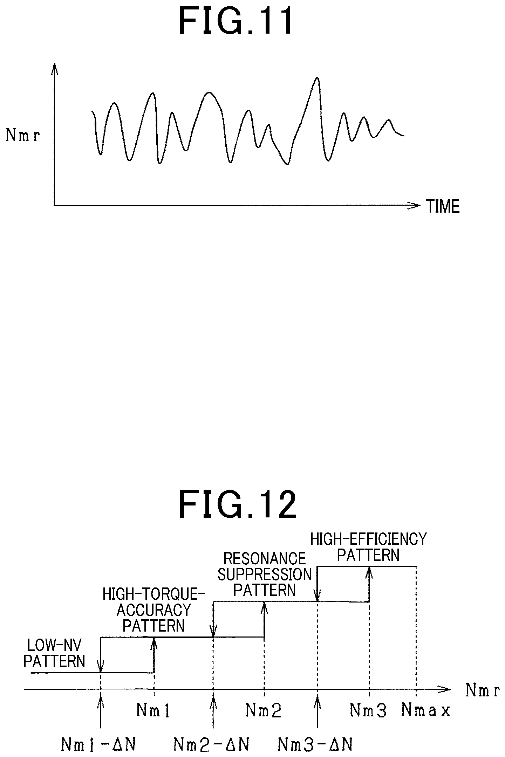

Hereinafter, a sixth embodiment will be described with reference to the drawings, focusing on the differences thereof from the first embodiment. In the present embodiment, a hysteresis is provided to the speed thresholds that are compared with the rotational speed Nmr of the rotor. This is to prevent the selected pulse pattern group from being excessively switched due to fluctuations in the rotational speed Nmr of the rotor as shown in FIG. 11.

Specifically, as shown in FIG. 12, when the rotational speed Nmr of the rotor is determined to be higher than the first speed threshold Nm1, the pattern setting unit 55 acquires, from the memory 56, the high-torque-accuracy pattern corresponding to the calculated modulation-rate command value Mr and sets the pulse pattern to be outputted to the signal generation unit 57 to the acquired high-torque-accuracy pattern. On the other hand, after the increase of the rotational speed Nmr of the rotor above the first speed threshold Nm1, when the rotational speed Nmr of the rotor is determined to have become lower than or equal to a value that is lower than the first speed threshold Nm1 by a predetermined value $\Delta N$, the pattern setting unit 55 acquires, from the memory 56, the low-NV pattern corresponding to the calculated modulation-rate command value Mr and sets the pulse pattern to be outputted to the signal generation unit 57 to the acquired low-NV pattern.

In addition, it is preferable to set the predetermined value $\Delta N$ to be larger than, for example, the maximum possible fluctuation amount of the rotational speed Nmr of the rotor in a steady state. The predetermined value $\Delta N$ may be adapted by, for example, an experiment or calculation.

When the rotational speed Nmr of the rotor is determined to be higher than the second speed threshold Nm2, the pattern setting unit 55 acquires, from the memory 56, the resonance suppression pattern corresponding to the calculated modulation-rate command value Mr and sets the pulse pattern to be outputted to the signal generation unit 57 to the acquired resonance suppression pattern. On the other hand, after the increase of the rotational speed Nmr of the rotor above the second speed threshold Nm2, when the rotational speed Nmr of the rotor is determined to have become lower than or equal to "Nm2 - $\Delta N$", the pattern setting unit 55 acquires, from the memory 56, the high-torque-accuracy pattern corresponding to the calculated modulation-rate command value Mr and sets the pulse pattern to be outputted to the signal generation unit 57 to the acquired high-torque-accuracy pattern.

When the rotational speed Nmr of the rotor is determined to be higher than the third speed threshold Nm3, the pattern setting unit 55 acquires, from the memory 56, the high-efficiency pattern corresponding to the calculated modulation-rate command value Mr and sets the pulse pattern to be outputted to the signal generation unit 57 to the acquired high-efficiency pattern. On the other hand, after the increase of the rotational speed Nmr of the rotor above the third speed threshold Nm3, when the rotational speed Nmr of the rotor is determined to have become lower than or equal to "Nm3 - $\Delta N$", the pattern setting unit 55 acquires, from the memory 56, the resonance suppression pattern corresponding to the calculated modulation-rate command value Mr and sets the pulse pattern to be outputted to the signal generation unit 57 to the acquired resonance suppression pattern.

According to the present embodiment described above, it is possible to prevent the selected pulse pattern group from being excessively switched.

(Other Embodiments)

The above-described embodiments may be modified as follows.

The method of using the hysteresis according to the sixth embodiment may be applied to the second embodiment.

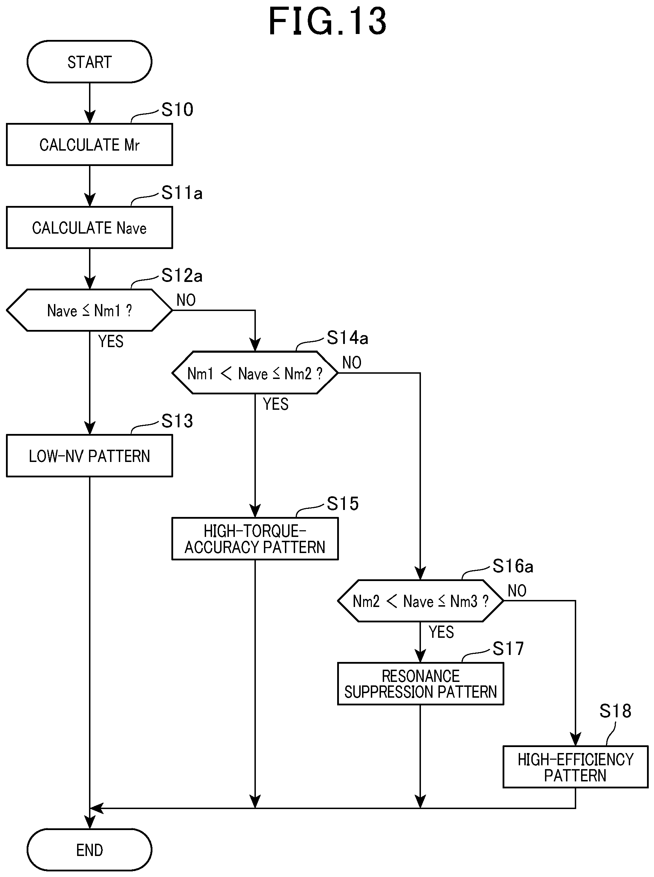

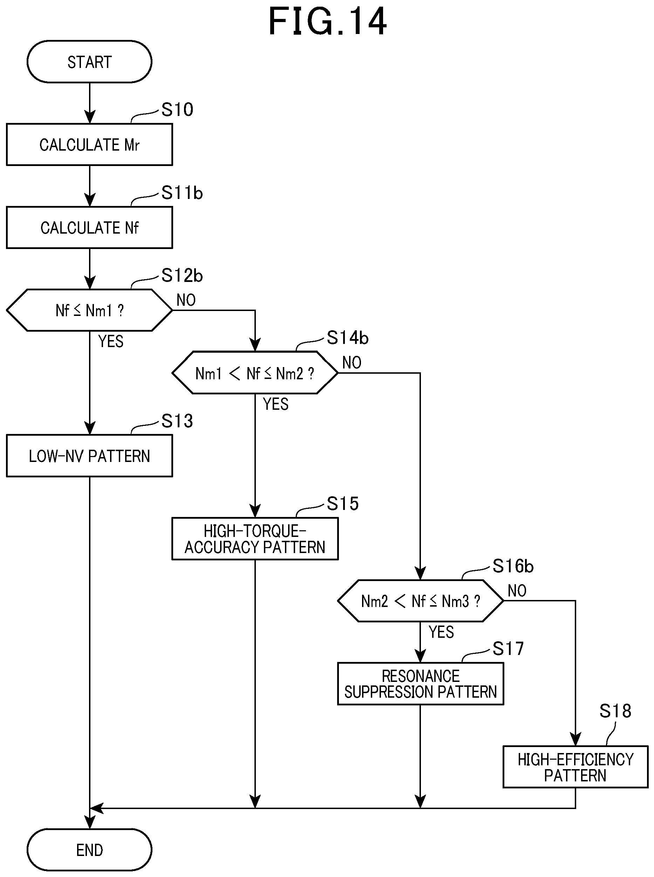

Processes for preventing the selected pulse pattern group from being excessively switched due to fluctuations in the rotational speed Nmr of the rotor are not limited to the one illustrated in the sixth embodiment, but may alternatively be those shown in FIGS. 13 and 14.

First, the process shown in FIG. 13 will be described. It should be noted that for the sake of convenience, in FIG. 13, the same reference signs are assigned to the same steps as those shown in FIG. 4.

In step S11a, the speed calculation unit 54 first calculates the rotational speed Nmr of the rotor. Then, the speed calculation unit 54 further calculates an average rotational speed Nave that is a time average value of the calculated rotational speed Nmr of the rotor. For example, the average rotational speed Nave may be calculated as an average of values of the rotational speed Nmr of the rotor calculated respectively in a plurality of control cycles. Thereafter, the calculated average rotational speed Nave is used instead of the rotational speed Nmr of the rotor in steps S12a, S14a, and S16a.

Next, the process shown in FIG. 14 will be described. It should be noted that for the sake of convenience, in FIG. 14, the same reference signs are assigned to the same steps as those shown in FIG. 4.

In step S11b, the speed calculation unit 54 first calculates the rotational speed Nmr of the rotor. Then, the speed calculation unit 54 further calculates a post-filter rotational speed Nf by performing a low-pass filter process on the calculated rotational speed Nmr of the rotor. Thereafter, the calculated post-filter rotational speed Nf is used instead of the rotational speed Nmr of the rotor in steps S12b, S14b and S16b.

The types of individual regions demarcated in the operation region of the rotating electric machine 10 are not limited to those shown in FIGS. 3 and 5. For example, in the operation region of the rotating electric machine 10 shown in FIG. 3, the low-NV region may be demarcated so as to be located on the lower speed side of and adjacent to the resonance suppression region without the high-torque-accuracy region demarcated therebetween.

The rotating electric machine is not limited to the one used as an in-vehicle main machine, but may alternatively be those used for other purposes, such as an electric motor employed in an electric power steering apparatus or an electric motor employed in an electric compressor for air conditioning.

The number of phases of the rotating electric machine is not limited to three, but may alternatively be four or more.

Each of the switches constituting the inverter is not limited to an IGBT, but may alternatively be implemented by, for example, an N-channel MOSFET having a body diode built therein. In this case, the higher-potential-side terminal of the switch is the drain of the MOSFET; and the lower-potential-side terminal of the switch is the source of the MOSFET.

The mobile object in which the control system is installed is not limited to a vehicle, but may alternatively be, for example, an aircraft or a ship. For example, in the case of the mobile object being an aircraft, the rotating electric machine included in the control system may serve as a flight power source of the aircraft. Otherwise, in the case of the mobile object being a ship, the rotating electric machine included in the control system may serve as a navigation power source of the ship. Furthermore, the installation destination of the control system is not limited to mobile objects.

The control apparatus and the control method described in the present disclosure may be realized by a dedicated computer that includes a processor, which is programmed to perform one or more functions embodied by a computer program, and a memory. As an alternative, the control apparatus and the control method described in the present disclosure may be realized by a dedicated computer that includes a processor configured with one or more dedicated hardware logic circuits. As another alternative, the control apparatus and the control method described in the present disclosure may be realized by one or more dedicated computers configured with a combination of a processor programmed to perform one or more functions, a memory and a processor configured with one or more dedicated hardware logic circuits. In addition, the computer program may be stored as computer-executable instructions in a computer-readable non-transitory tangible recording medium.

While the present disclosure has been described pursuant to the above-described embodiments, it should be appreciated that the present disclosure is not limited to these embodiments and the structures.

## Claims

1.  A control apparatus (50) for a rotating electric machine, the control apparatus (50) to be applied to a system comprising a rotating electric machine (10), a DC power supply (30) and an inverter (20) that electrically connects the rotating electric machine (10) and the DC power supply (30),

    the control apparatus (50) comprising:

    a pattern setting unit (55) that sets a pulse pattern, the pulse pattern defining a switching pattern of switches (SWH, SWL) that constitute the inverter (20); and
    a switch control unit (57) that controls switching of the switches (SWH, SWL) based on the set pulse pattern so as to control drive of the rotating electric machine (10),

    wherein:

    the pattern setting unit (55) acquires a determination parameter (Nmr; Trq*) indicating an operating point of the rotating electric machine (10) and sets a pulse pattern corresponding to, of a plurality of individual regions into which an operation region of the rotating electric machine (10) is divided, an individual region that includes the acquired determination parameter (Nmr; Trq*); **characterised in that**
    pulse patterns respectively corresponding to the plurality of individual regions include pulse patterns defined by imposing mutually different requirements,
    wherein the plurality of individual regions include at least two of:

    a resonance suppression region corresponding to a pulse pattern defined by imposing a requirement to reduce, of harmonic components of electric current flowing between the DC power supply (30) and a smoothing capacitor (22) of the inverter (20), the harmonic component of a specific order in the vicinity of a resonant frequency of an LC resonant circuit that includes the DC power supply (30) and the smoothing capacitor (22);

a low-NV, Noise and Vibration, region corresponding to a pulse pattern defined by imposing a requirement to reduce, of harmonic components contained in a pulse pattern represented by a binary signal, the harmonic component of a specific order included in a specific frequency range that is a part of the human audible range;

a high-torque-accuracy region corresponding to a pulse pattern defined by imposing both a requirement to fix the drive state of the switches (SWH, SWL) corresponding to a maximum phase whose phase voltage is highest among three phases of the inverter (20) and a requirement to increase the number of times of switching of the switches (SWH, SWL) corresponding to a minimum phase, whose phase voltage is lowest among the three phases of the inverter (20), more than the number of times of switching of the switches (SWH, SWL) corresponding to an intermediate phase that is the one of the three phases other than the maximum phase and the minimum phase; and

a high-efficiency region corresponding to a pulse pattern defined by imposing a requirement to reduce, of the harmonic components contained in the pulse pattern represented by the binary signal, the harmonic component of a specific order for reducing a loss occurring in the rotating electric machine (10).

2. The control apparatus (50) for a rotating electric machine as set forth in Claim 1, wherein:

the determination parameter (Nmr; Trq*) is at least one of the rotational speed (Nmr) of a rotor of the rotating electric machine (10) and the torque (Trq*) of the rotating electric machine (10); and

the operation region of the rotating electric machine (10) is defined by the rotational speed of the rotor and the torque of the rotating electric machine (10).

3. The control apparatus (50) for a rotating electric machine as set forth in Claim 2, wherein in the operation region of the rotating electric machine (10), the plurality of individual regions are located in order from a lower speed side to a higher speed side of the rotational speed of the rotor.

4. The control apparatus (50) for a rotating electric machine as set forth in Claim 3, wherein:

the plurality of individual regions include the low-NV, Noise and Vibration, region, the resonance suppression region and the high-efficiency region; and

the low-NV, Noise and Vibration, region is located on the lower speed side of the resonance suppression region, whereas the high-efficiency region is located on the higher speed side of the resonance suppression region.

5. The control apparatus (50) for a rotating electric machine as set forth in Claim 3 or 4, wherein:

the more the individual regions are located on the higher speed side, the less the numbers of times of switching of the switches (SWH, SWL) determined by the pulse patterns respectively corresponding to the individual regions; and

the pattern setting unit (55) corrects, when a power supply voltage of the inverter (20) is high, boundaries between the adjacent individual regions in the operation region of the rotating electric machine (10) to the higher speed side than when the power supply voltage is low.

6. The control apparatus (50) for a rotating electric machine as set forth in any one of Claims 3 to 5, wherein the pattern setting unit (55) calculates, for each adjacent pair of the individual regions in the operation region of the rotating electric machine (10), both the value of an evaluation function corresponding to a lower speed region that is one of the pair of the individual regions which is located on the lower speed side and the value of an evaluation function corresponding to a higher speed region that is the other of the pair of the individual regions which is located on the higher speed side, and corrects the boundary between the lower speed region and the higher speed region based on the calculated values of the evaluation functions.

7. The control apparatus (50) for a rotating electric machine as set forth in Claim 6, wherein the pattern setting unit (55) calculates the values of the evaluation functions based on at least one of the power supply voltage of the inverter (20), electric current flowing through the rotating electric machine (10), the torque of the rotating electric machine (10) and the rotational speed of the rotor.

8. The control apparatus (50) for a rotating electric machine as set forth in Claim 6 or 7, wherein the pattern setting unit (55) calculates a correction amount of the boundary between the lower speed region and the higher speed region based on the difference between the value of the evaluation function corresponding to the lower speed region and the value of the evaluation function corresponding to the higher speed region.

9. The control apparatus (50) for a rotating electric machine as set forth in any one of Claims 6 to 8, further comprising a storage unit (56) for storing the pulse patterns respectively corresponding to the plurality of individual regions, wherein the pattern setting unit (55) sets the pulse patterns based on information stored in the storage unit, and stores information on the boundary between the lower speed region and the higher speed region in the storage unit after correcting the boundary.

10. The control apparatus (50) for a rotating electric machine as set forth in any one of Claims 1 to 9, wherein the pattern setting unit (55) sets a hysteresis to thresholds for determining which one of the plurality of individual regions the acquired determination parameter (Nmr; Trq*) is included in.

11. The control apparatus (50) for a rotating electric machine as set forth in any one of Claims 1 to 9, wherein the pattern setting unit (55) calculates a time average value of the acquired determination parameter (Nmr; Trq*), and sets the pulse pattern corresponding to that one of the plurality of individual regions which includes the calculated time average value.

12. The control apparatus (50) for a rotating electric machine as set forth in any one of Claims 1 to 9, wherein the pattern setting unit (55) performs a low-pass filter process on the acquired determination parameter (Nmr; Trq*), and sets the pulse pattern corresponding to that one of the plurality of individual regions which includes the determination parameter (Nmr; Trq*) having been subjected to the low-pass filter process.

## Patentansprüche

1. Steuerungsvorrichtung (50) für eine rotierende elektrische Maschine, wobei die Steuerungsvorrichtung (50) bei einem System anzuwenden ist, das eine rotierende elektrische Maschine (10), eine Gleichstromleistungsversorgung (30) und einen Wechselrichter (20) aufweist, der die rotierende elektrische Maschine (10) und die Gleichstromleistungsversorgung (30) elektrisch verbindet,

   wobei die Steuerungsvorrichtung (50) aufweist:

   eine Mustereinstellungseinheit (55), die ein Impulsmuster einstellt, wobei das Impulsmuster ein Schaltmuster von Schaltern (SWH, SWL), die den Wechselrichter (20) bilden, definiert, und
   eine Schaltsteuerungseinheit (57), die ein Schalten der Schalter (SWH, SWL) auf der Grundlage des eingestellten Impulsmusters steuert, um den Antrieb der rotierenden elektrischen Maschine (10) zu steuern, wobei:

   die Mustereinstellungseinheit (55) einen Bestimmungsparameter (Nmr; Trq*) beschafft, der einen Betriebspunkt der rotierenden elektrischen Maschine 10) angibt, und ein Impulsmuster einstellt, das einer individuellen Region, die dem beschafften Bestimmungsparameter (Nmr; Trq*) entspricht, aus einer Vielzahl individueller Regionen, in die ein Betriebsbereich der rotierenden elektrischen Maschine (10) unterteilt ist, entspricht,
   **dadurch gekennzeichnet, dass**
   Impulsmuster, die jeweils der Vielzahl der individuellen Regionen entsprechen, Impulsmuster aufweisen, die durch Auferlegen gegenseitig unterschiedlicher Anforderungen definiert sind,
   wobei die Vielzahl der individuellen Regionen zumindest zwei aus den folgenden aufweist:

   eine Resonanzunterdrückungsregion, die einem Impulsmuster entspricht, das durch ein Auferlegen eines Anforderung zum Reduzieren, aus Oberschwingungskomponenten eines zwischen der Gleichstromleistungsversorgung (30) und einem Glättungskondensator (22) des Wechselrichters (20) fließenden Stroms, der Oberschwindungskomponente einer spezifischen Ordnung in der Nähe einer Resonanzfrequenz eines LC-Resonanzschaltung, die die Gleichstromleistungsversorgung (30) und den Glättungskondensator (22) aufweist, definiert ist,
   eine Niedrig-NV-, Geräusch- und Vibrations-, Region, die einem Impulsmuster entspricht, das durch Auferlegen einer Anforderung zum Reduzieren, aus Oberschwingungskomponenten, die in einem durch ein binäres Signal repräsentierten Impulsmuster enthalten sind, der Oberschwingungskomponente einer spezifischen Ordnung, die in einem spezifischen Frequenzbereich enthalten ist, der ein Teil des für Menschen hörbaren Bereichs ist, definiert ist,

eine Hoch-Drehmomentgenauigkeits-Region, die einem Impulsmuster entspricht, das durch Auferlegen sowohl einer Anforderung zum Fixieren des Antriebszustands der Schalter (SWH, SWL), die einer maximalen Phase entsprechen, deren Phasenspannung unter drei Phasen des Wechselrichters (20) am höchsten ist, als auch einer Anforderung zum Erhöhen der Anzahl der Schaltzeitpunkte des Schaltens der Schalter (SWH, SWL), die einer minimalen Phase entsprechen, deren Phasenspannung unter den drei Phasen des Wechselrichters (20) am niedrigsten ist, derart, dass sie höher als die Anzahl der Schaltzeitpunkte der Schalter (SWH, SWL) ist, die einer Zwischenphase entsprechen, die die eine der drei Phasen außer der maximalen Phase und der minimalen Phase ist, definiert ist, und

eine Hoch-Wirkungsgradregion, die einem Impulsmuster entspricht, das durch Auferlegen einer Anforderung zum Reduzieren, aus den Oberschwingungskomponenten, die in dem durch ein binäres Signal repräsentierten Impulsmuster enthalten sind, der Oberschwindungskomponente einer spezifischen Ordnung, um einen in der rotierenden elektrischen Maschine (10) auftretenden Verlust zu reduzieren, definiert ist.

2. Steuerungsvorrichtung (50) für eine rotierende elektrische Maschine nach Anspruch 1, wobei:

der Bestimmungsparameter (Nmr; Trq*) die Drehgeschwindigkeit (Nmr) eines Rotors der rotierenden elektrischen Maschine (10) und/oder das Drehmoment (Trq*) der rotierenden elektrischen Maschine (10) ist, und der Betriebsbereich der rotierenden elektrischen Maschine (10) durch die Drehgeschwindigkeit des Rotors und das Drehmoment der rotierenden elektrischen Maschine (10) definiert ist.

3. Steuerungsvorrichtung (50) für eine rotierende elektrische Maschine nach Anspruch 2, wobei in dem Betriebsbereich der rotierenden elektrischen Maschine (10) die Vielzahl individueller Regionen in der Reihenfolge von einer niedrigeren Geschwindigkeitsseite bis zu einer höheren Geschwindigkeitsseite der Drehgeschwindigkeit des Rotors angeordnet sind.

4. Steuerungsvorrichtung (50) für eine rotierende elektrische Maschine nach Anspruch 3, wobei:

die Vielzahl der individuellen Regionen die Niedrig-NV-, Geräusch- und Vibrations-, Region, die Resonanzunterdrückungsregion und die Hoch-Wirkungsgradregion aufweisen, und die Niedrig-NV-, Geräusch- und Vibrations-, Region auf der niedrigeren Geschwindigkeitsseite der Resonanzunterdrückungsregion angeordnet ist, wohingegen die Hoch-Wirkungsgradregion auf der höheren Geschwindigkeitsseite der Resonanzunterdrückungsregion angeordnet ist.

5. Steuerungsvorrichtung (50) für eine rotierende elektrische Maschine nach Anspruch 3 oder 4, wobei:

je mehr die individuellen Regionen auf der höheren Geschwindigkeitsseite angeordnet sind, umso weniger die Anzahl der Schaltzeitpunkte der Schalter (SWH, SWL) ist, die durch die Impulsmuster bestimmt sind, die jeweils den individuellen Regionen entsprechen, und, wenn die Leistungsversorgungsspannung des Wechselrichters (20) hoch ist, die Mustereinstellungseinheit (55) Grenzen zwischen den benachbarten individuellen Regionen in dem Betriebsbereich der rotierenden elektrischen Maschine (10) auf die höhere Geschwindigkeitsseite korrigiert, als wenn die Leistungsversorgungsspannung niedrig ist.

6. Steuerungsvorrichtung (50) für eine rotierende elektrische Maschine nach einem der Ansprüche 3 bis 5, wobei die Mustereinstellungseinheit (55) für jedes benachbarte Paar der individueller Regionen in dem Betriebsbereich der rotierenden elektrischen Maschine (10) sowohl den Wert einer Bewertungsfunktion, die einer Region niedrigerer Geschwindigkeit entspricht, die eine aus dem Paar der individuellen Regionen ist, die auf der niedrigeren Geschwindigkeitsseite angeordnet ist, und den Wert einer Bewertungsfunktion, die einer Region höherer Geschwindigkeit entspricht, die die andere aus dem Paar der individuellen Regionen ist, die auf der der höheren Geschwindigkeitsseite angeordnet ist, und die Grenze zwischen der Region niedrigerer Geschwindigkeit und der Region höherer Geschwindigkeit auf der Grundlage der berechneten Werte der Bewertungsfunktionen korrigiert.

7. Steuerungsvorrichtung (50) für eine rotierende elektrische Maschine nach Anspruch 6, wobei die Mustereinstellungseinheit (55) die Werte der Bewertungsfunktionen auf der Grundlage der Leistungsversorgungsspannung des Wechselrichters (20) und/oder eines durch die rotierende elektrische Maschine (10) fließenden Stroms und/oder des Drehmoments der rotierenden elektrischen Maschine (10) und/oder der Drehgeschwindigkeit des Rotors berechnet.

8. Steuerungsvorrichtung (50) für eine rotierende elektrische Maschine nach Anspruch 6 oder 7, wobei die Mustereinstellungseinheit (55) eine Korrekturgröße der Grenze zwischen der Region niedrigerer Geschwindigkeit und der Region höherer Geschwindigkeit auf der Grundlage der Differenz zwischen dem Wert der Bewertungsfunktion, die der Region niedrigerer Geschwindigkeit entspricht, und dem Wert der Bewertungsfunktion, die der Region höherer Geschwindigkeit entspricht, berechnet.

9. Steuerungsvorrichtung (50) für eine rotierende elektrische Maschine nach einem der Ansprüche 6 bis 8, weiterhin mit einer Speichereinheit (56) zum Speichern der Impulsmuster, die jeweils der Vielzahl individueller Regionen entsprechen, wobei die Mustereinstellungseinheit (55) die Impulsmuster auf der Grundlage von Informationen, die in der Speichereinheit gespeichert sind, einstellt, und nach Korrektur der Grenze Informationen bezüglich der Grenze zwischen der Region niedrigerer Geschwindigkeit und der Region höherer Geschwindigkeit in der Speichereinheit speichert.

10. Steuerungsvorrichtung (50) für eine rotierende elektrische Maschine nach einem der Ansprüche 1 bis 9, wobei die Mustereinstellungseinheit (55) eine Hysterese für Schwellwerte zur Bestimmung, in welcher einen aus der Vielzahl der individuellen Regionen der beschaffte Bestimmungsparameter (Nmr; Trq*) enthalten ist, einstellt.

11. Steuerungsvorrichtung (50) für eine rotierende elektrische Maschine nach einem der Ansprüche 1 bis 9, wobei die Mustereinstellungseinheit (55) einen Zeitdurchschnittswert des beschafften Bestimmungsparameters (Nmr; Trq*) berechnet, und das Impulsmuster entsprechend der einen aus der Vielzahl der individuellen Regionen, die den berechneten Zeitdurchschnittswert entspricht, einstellt.

12. Steuerungsvorrichtung (50) für eine rotierende elektrische Maschine nach einem der Ansprüche 1 bis 9, wobei die Mustereinstellungseinheit (55) einen Tiefpassfilterungsprozess an dem beschafften Bestimmungsparameter (Nmr; Trq*) durchführt, und das Impulsmuster entsprechend der einen aus der Vielzahl individueller Regionen, die den dem Tiefpassfilterungsprozess unterzogenen Bestimmungsparameter (Nmr; Trq*) aufweist, einstellt.


**Revendications**

1. Appareil de commande (50) pour une machine électrique rotative, l'appareil de commande (50) étant destiné à être appliqué à un système comprenant une machine électrique rotative (10), une alimentation électrique CC (30) et un inverseur (20) qui connecte électriquement la machine électrique rotative (10) et l'alimentation électrique CC (30), l'appareil de commande (50) comprenant :

   une unité de réglage de motif (55) qui règle un motif d'impulsion, le motif d'impulsion définissant un motif de commutation des commutateurs (SWH, SWL) qui constituent l'inverseur (20) ; et
   une unité de commande des commutateurs (57) qui commande la commutation des commutateurs (SWH, SWL) sur la base du motif d'impulsion réglé de façon à commander l'attaque de la machine électrique rotative (10), dans lequel :

   l'unité de réglage de motif (55) acquière un paramètre de détermination (Nmr ; Trq*) indiquant un point de fonctionnement de la machine électrique rotative (10) et règle un motif d'impulsion correspondant, parmi une pluralité de régions individuelles en lesquelles est subdivisée une région de fonctionnement de la machine électrique rotative (10), à une région individuelle qui inclut le paramètre de détermination acquis (Nmr ; Trq*) ;
   **caractérisé en ce que**
   les motifs d'impulsions correspondant respectivement à la pluralité de régions individuelles incluent des motifs d'impulsions définis avec des exigences mutuellement différentes,
   la pluralité de régions individuelles incluant au moins deux parmi :

   une région de suppression de résonance correspondant à un motif d'impulsion défini avec comme exigence de réduire, parmi les composantes harmoniques du courant électrique s'écoulant entre l'alimentation électrique CC (30) et un condensateur de lissage (22) de l'inverseur (20), la composante harmonique d'un ordre spécifique au voisinage d'une fréquence de résonance d'un circuit résonant LC qui inclut l'alimentation électrique CC (30) et le condensateur de lissage (22) ;

une région de faible-BV, Bruit et Vibration, correspondant à un motif d'impulsion défini avec pour exigence de réduire, parmi les composantes harmoniques contenues dans un motif d'impulsion représenté par un signal binaire, la composante harmonique d'un ordre spécifique incluse dans une plage de fréquence spécifique qui fait partie de la plage audible par l'oreille humaine ;

une région de haute précision de couple correspondant à un motif d'impulsion défini avec à la fois comme exigence de fixer l'état d'attaque des commutateurs (SWH, SWL) correspondant à une phase maximale dont la tension de phase est la plus élevée des trois phases de l'inverseur (20) et comme exigence d'augmenter le nombre de commutations des commutateurs (SWH, SWL) correspondant à une phase minimale, dont la tension de phase est la plus basse des trois phases de l'inverseur (20), à plus que le nombre de commutations des commutateurs (SWH, SWL) correspondant à une phase intermédiaire qui est celle des trois phases qui n'est ni la phase maximale ni la phase minimale ; et

une région de haute efficacité correspondant à un motif d'impulsion défini avec comme exigence de réduire, parmi les composantes harmoniques contenues dans le motif d'impulsion représenté par le signal binaire, la composante harmonique d'un ordre spécifique permettant de réduire une perte se produisant dans la machine électrique rotative (10).

2.  Appareil de commande (50) pour une machine électrique rotative selon la revendication 1, dans lequel :

le paramètre de détermination (Nmr ; Trq*) est au moins l'un de la vitesse de rotation (Nmr) d'un rotor de la machine électrique rotative (10) et du couple (Trq*) de la machine électrique rotative (10) ; et la région de fonctionnement de la machine électrique rotative (10) est définie par la vitesse de rotation du rotor et le couple de la machine électrique rotative (10).

3.  Appareil de commande (50) pour une machine électrique rotative selon la revendication 2, dans lequel, dans la région de fonctionnement de la machine électrique rotative (10), les différentes régions individuelles sont positionnées de manière ordonnée du côté vitesse basse vers le côté vitesse élevée de la vitesse de rotation du rotor.

4.  Appareil de commande (50) pour une machine électrique rotative selon la revendication 3, dans lequel :

la pluralité de régions individuelles inclut la région de faible-BV, Bruit et Vibration, la région de suppression de résonance et la région de haute efficacité ; et la région de faible-BV, Bruit et Vibration, est située sur le côté vitesse basse de la région de suppression de résonance, tandis que la région de haute efficacité est située sur le côté vitesse élevée de la région de suppression de résonance.

5.  Appareil de commande (50) pour une machine électrique rotative selon la revendication 3 ou 4, dans lequel :

plus les régions individuelles sont situées sur le côté vitesse élevée, moins le nombre de commutations des commutateurs (SWH, SWL) déterminé par les motifs d'impulsions correspondant respectivement aux régions individuelles est élevé ; et l'unité de réglage de motif (55) corrige, lorsqu'une tension d'alimentation électrique de l'inverseur (20) est élevée, les frontières entre les régions individuelles adjacentes dans la région de fonctionnement de la machine électrique rotative (10) plus vers le côté vitesse élevée que lorsque la tension d'alimentation électrique est basse.

6.  Appareil de commande (50) pour une machine électrique rotative selon l'une quelconque des revendications 3 à 5, dans lequel l'unité de réglage de motif (55) calcule, pour chaque paire adjacente des régions individuelles dans la région de fonctionnement de la machine électrique rotative (10), la valeur d'une fonction d'évaluation correspondant à une région de vitesse basse qui est celle de la paire de régions individuelles qui est située sur le côté vitesse basse ainsi que la valeur d'une fonction d'évaluation correspondant à une région de vitesse élevée qui est l'autre de la paire de régions individuelles, qui est située sur le côté vitesse élevée, et corrige la frontière entre la région de vitesse basse et la région de vitesse élevée sur la base des valeurs calculées pour les fonctions d'évaluation.

7.  Appareil de commande (50) pour une machine électrique rotative selon la revendication 6, dans lequel l'unité de réglage de motif (55) calcule les valeurs des fonctions d'évaluation sur la base d'au moins l'un des paramètres suivants : la tension d'alimentation électrique de l'inverseur (20), le courant électrique circulant à travers la machine électrique rotative (10), le couple de la machine électrique rotative (10) et la vitesse de rotation du rotor.

8.  Appareil de commande (50) pour une machine électrique rotative selon la revendication 6 ou 7, dans lequel l'unité de réglage de motif (55) calcule une quantité de correction de la frontière entre la région de vitesse basse et la région de vitesse élevée sur la base de la différence entre la valeur de la fonction d'évaluation correspondant à la région de vitesse basse et la valeur de la fonction d'évaluation correspondant à la région de vitesse élevée.

9. Appareil de commande (50) pour une machine électrique rotative selon l'une quelconque des revendications 6 à 8, comprenant en outre une unité de stockage (56) pour le stockage des motifs d'impulsions correspondant respectivement à la pluralité de régions individuelles, l'unité de réglage de motif (55) réglant les motifs d'impulsion sur la base d'informations stockées dans l'unité de stockage, et stockant des informations sur la frontière entre la région de vitesse basse et la région de vitesse élevée dans l'unité de stockage après correction de la frontière.

10. Appareil de commande (50) pour une machine électrique rotative selon l'une quelconque des revendications 1 à 9, dans lequel l'unité de réglage de motif (55) définit une hystérésis pour les seuils permettant de déterminer dans laquelle de la pluralité de régions individuelles est inclus le paramètre de détermination acquis (Nmr ; Trq*).

11. Appareil de commande (50) pour une machine électrique rotative selon l'une quelconque des revendications 1 à 9, dans lequel l'unité de réglage de motif (55) calcule une valeur moyenne dans le temps du paramètre de détermination acquis (Nmr ; Trq*), et règle le motif d'impulsion correspondant à celle de la pluralité de régions individuelles qui inclut la valeur moyenne dans le temps calculée.

12. Appareil de commande (50) pour une machine électrique rotative selon l'une quelconque des revendications 1 à 9, dans lequel l'unité de réglage de motif (55) exécute une opération de filtrage passe-bas sur le paramètre de détermination acquis (Nmr ; Trq*), et règle le motif d'impulsion correspondant à celle de la pluralité de régions individuelles qui inclut le paramètre de détermination (Nmr ; Trq*) ayant été soumis à l'opération de filtrage passe-bas.

# FIG.1

EP 4 213 373 B1

# FIG.2

# FIG.3

(a)

HIGH-TORQUE-ACCURACY PATTERN

LOW-NV PATTERN

Tmax →

Trq✳

RESONANCE SUPPRESSION PATTERN

HIGH-EFFICIENCY PATTERN

Nmr

Nα     Nβ     Nmax

Nm1  Nm2     Nm3

(b)

Ib/Im

0

Nmr

Nrz

# FIG.4

```
                    ┌──────────┐
                    │  START   │
                    └────┬─────┘
                         │
                         ▼            ⌐S10
                  ┌─────────────┐
                  │ CALCULATE Mr│
                  └──────┬──────┘
                         │
                         ▼            ⌐S11
                  ┌──────────────┐
                  │ CALCULATE Nmr│
                  └──────┬───────┘
                         │
                         ▼            ⌐S12
                  ╱──────────────╲         NO
                 ⟨  Nmr ≦ Nm1 ?   ⟩─────────────┐
                  ╲──────────────╱              │
                         │ YES                  ▼          ⌐S14
                         │              ╱──────────────────╲       NO
                         │             ⟨  Nm1 < Nmr ≦ Nm2 ?  ⟩──────────────┐
                         │              ╲──────────────────╱               │
                         │                      │ YES                      │
                         ▼            ⌐S13       │                          │
                  ┌──────────────┐              │                          │
                  │ LOW-NV PATTERN│             │                          │
                  └──────┬───────┘              │                          │
                         │                      ▼           ⌐S15           │
                         │              ┌──────────────────┐               │
                         │              │  HIGH-TORQUE-     │               │
                         │              │ ACCURACY PATTERN  │               │
                         │              └────────┬─────────┘               │
                         │                       │                         ▼          ⌐S16
                         │                       │                 ╱──────────────────╲      NO
                         │                       │                ⟨  Nm2 < Nmr ≦ Nm3 ?  ⟩─────────┐
                         │                       │                 ╲──────────────────╱          │
                         │                       │                         │ YES                 │
                         │                       │                         ▼          ⌐S17        │
                         │                       │                 ┌──────────────────┐          │
                         │                       │                 │    RESONANCE     │          │
                         │                       │                 │ SUPPRESSION PATTERN│         │
                         │                       │                 └────────┬─────────┘          │
                         │                       │                          │              S18    │
                         │                       │                          │          ┌──────────▼──────┐
                         │                       │                          │          │ HIGH-EFFICIENCY │
                         │                       │                          │          │    PATTERN      │
                         │                       │                          │          └────────┬────────┘
                         │                       │                          │                   │
                         ▼                       ▼                          ▼                   │
                  ┌──────────┐◄──────────────────┴──────────────────────────┴───────────────────┘
                  │   END    │
                  └──────────┘
```

# FIG.5

# FIG.6

# FIG.7

HIGH-TORQUE-ACCURACY PATTERN

LOW-NV PATTERN

RESONANCE SUPPRESSION PATTERN

HIGH-EFFICIENCY PATTERN

Tmax

Trq*

Nmr

L1  L2  L3

Nmax

# FIG.8

START

↓

CALCULATE Mr —S10

↓

CALCULATE Nmr —S11

↓

Nmr ≤ L1 ? —S30 — NO → L1 < Nmr ≤ L2 ? —S31 — NO →

YES ↓     YES ↓     L2 < Nmr ≤ L3 ? —S32 — NO →

LOW-NV PATTERN —S13

HIGH-TORQUE-ACCURACY PATTERN —S15

RESONANCE SUPPRESSION PATTERN —S17

HIGH-EFFICIENCY PATTERN —S18

END

# FIG.9

(a) VDC IS LOW

HIGH-TORQUE-ACCURACY PATTERN

LOW-NV PATTERN

RESONANCE SUPPRESSION PATTERN
HIGH-EFFICIENCY PATTERN

$T max$

$Trq*$

$Nmr$

$N\beta$

(b) VDC IS HIGH

$T max$

$Trq*$

$Nmr$

$Nm1$    $Nm2$    $N\alpha$    $Nm3$    $Nmax$

# FIG.10

START

S40

### CALCULATE H1

| H1 | SMALL ↔ LARGE |
|---|---|
| PHASE CURRENTS | LOW ↔ HIGH |
| Nmr | HIGH ↔ LOW |
| Trq* | SMALL ↔ LARGE |

S41

### CALCULATE H2

| H2 | SMALL ↔ LARGE |
|---|---|
| VDC | HIGH ↔ LOW |
| PHASE CURRENTS | LOW ↔ HIGH |
| Nmr | LOW ↔ HIGH |
| Trq* | SMALL ↔ LARGE |

S42

### CALCULATE H3

| H3 | SMALL ↔ LARGE |
|---|---|
| VDC | LOW ↔ HIGH |
| PHASE CURRENTS | HIGH ↔ LOW |
| Nmr | SMALL WHEN Nmr IS CLOSE TO Nrz |
| Trq* | LARGE ↔ SMALL |

S43

### CALCULATE H4

| H4 | SMALL ↔ LARGE |
|---|---|
| VDC | f (VDC) |
| PHASE CURRENTS | LOW ↔ HIGH |
| Nmr | HIGH ↔ LOW |
| Trq* | SMALL ↔ LARGE |

S44

$Nm1 = Nm1 + K1 \, (H2 - H1)$ ; AND UPDATE PATTERNS

S45

$Nm2 = Nm2 + K2 \, (H3 - H2)$ ; AND UPDATE PATTERNS

S46

$Nm3 = Nm3 + K3 \, (H4 - H3)$ ; AND UPDATE PATTERNS

END

28

# FIG.11

Nmr

TIME

# FIG.12

HIGH-EFFICIENCY
PATTERN

RESONANCE
SUPPRESSION
PATTERN

HIGH-TORQUE-
ACCURACY
PATTERN

LOW-NV
PATTERN

Nm1    Nm2    Nm3  Nmax    Nmr

Nm1-ΔN    Nm2-ΔN    Nm3-ΔN

# FIG.13

START

CALCULATE Mr — S10

CALCULATE Nave — S11a

Nave ≤ Nm1 ? — S12a

NO

Nm1 < Nave ≤ Nm2 ? — S14a

NO

YES

LOW-NV PATTERN — S13

YES

HIGH-TORQUE-ACCURACY PATTERN — S15

Nm2 < Nave ≤ Nm3 ? — S16a

NO

YES

RESONANCE SUPPRESSION PATTERN — S17

S18

HIGH-EFFICIENCY PATTERN

END

# FIG.14

```
           ┌─────────┐
           │  START  │
           └─────────┘
                │
                ▼            S10
        ┌─────────────────┐
        │  CALCULATE Mr   │
        └─────────────────┘
                │
                ▼            S11b
        ┌─────────────────┐
        │  CALCULATE Nf   │
        └─────────────────┘
                │
                ▼            S12b           NO
           < Nf ≤ Nm1 ? >──────────────┐
                │ YES                    │
                │              S14b      ▼          NO
                │          < Nm1 < Nf ≤ Nm2 ? >──────────┐
                │                │ YES                    │
                ▼  S13           │                        │
        ┌─────────────────┐      ▼         S15            │
        │  LOW-NV PATTERN │  ┌──────────────────┐         │
        └─────────────────┘  │  HIGH-TORQUE-    │         │
                │            │ ACCURACY PATTERN │         │
                │            └──────────────────┘         │
                │                │             S16b        ▼         NO
                │                │        < Nm2 < Nf ≤ Nm3 ? >──────────┐
                │                │              │ YES  S17              │
                │                │              ▼                        │
                │                │      ┌──────────────────┐   S18       │
                │                │      │    RESONANCE     │             ▼
                │                │      │SUPPRESSION PATTERN│  ┌──────────────────┐
                │                │      └──────────────────┘  │ HIGH-EFFICIENCY  │
                │                │              │             │    PATTERN       │
                │                │              │             └──────────────────┘
                ▼                ▼              ▼                        │
           ┌─────────┐◄─────────────────────────────────────────────────┘
           │   END   │
           └─────────┘
```

31

EP 4 213 373 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6221958 B
- JP 2018201321 A
- EP 3527420 A1
- JP 2013215041 A
- JP 2016189648 A
- JP 6390489 B
- JP 2016136838 A